# EUROPÄISCHE PATENTSCHRIFT

(11) **EP 2 297 835 B1**
(45) Veröffentlichungstag und Bekanntmachung des Hinweises auf die Patenterteilung: **24.04.2013**
(21) Anmeldenummer: 09777114.1
(22) Anmeldetag: 10.07.2009
(51) Int. Cl.: H02K 1/27

(54) **PERMANENTMAGNETISCHER ROTOR**
PERMANENT-MAGNETIC ROTOR
ROTOR À MAGNÉTISME PERMANENT

(30) Priorität: 14.07.2008 DE 102008032844
(43) Veröffentlichungstag der Anmeldung: 23.03.2011
(73) Patentinhaber: Hanning Elektro-Werke GmbH & Co. KG, 33813 Oerlinghausen (DE)
(72) Erfinder: AMRHEIN, Wolfgang, A-4100 Ottensheim (AT); DE LA HAYE, Ralf, 33604 Bielefeld (DE); SILBER, Siegfried, A-4202 Kirchschlag (AT)
(74) Vertreter: von dem Borne, Andreas
(86) Internationale Anmeldenummer: PCT/EP2009/005033
(87) Internationale Veröffentlichungsnummer: WO 2010/006737

(56) Entgegenhaltungen:
- EP-A2- 1 881 582
- DE-A1- 19 915 664
- DE-A1-102005 047 771
- DE-A1-102006 006 882
- JP-A- 11 098 736
- JP-A- 2001 037 119
- US-A- 5 684 352

## Beschreibung

Die Erfindung betrifft einen permanentmagnetischen Rotor für einen Elektromotor, vorzugsweise für einen Innenläufermotor, welcher ein Blechpaket aus mehreren in axialer Richtung gestapelten Rotorblechen aufweist, wobei in von Ausnehmungen der Rotorbleche gebildeten Aufnahmetaschen Permanentmagnete angeordnet sind.

Bei den aus der Praxis bekannten, geblechten Rotoren dieser Art sind die Magnete in der Regel in den Rotor eingebettet und folglich vollkommen mit ferromagnetischem Material umgeben. Dieses gelingt konstruktiv dadurch, dass die einzelnen Rotorbleche mit Ausnehmungen versehen sind, welche nach entsprechender Paketierung fluchtend angeordnet sind und Aufnahmetaschen für die Permanentmagnete bilden. Dabei werden im Bereich der Magnete bzw. im Bereich der Ausnehmung dünne Kurzschlussstege gebildet, welche auch als Sättigungsstege bezeichnet werden und einen Teil des permanentmagnetischen Flusses kurzschließen.

Ein derartiger Rotor ist beispielsweise aus der EP 1 456 931 B1 bekannt. Die Aufnahmetaschen bzw. Ausnehmungen sind im Querschnitt "länger" als die Dauermagnete, das heißt, sie werden von diesen nicht vollständig ausgefüllt, so dass beidseitig der Magnete hohle Abschnitte entstehen, die die Form eines unregelmäßigen Fünfecks hat. Im Bereich dieser hohlen Abschnitte sind schmale Blechabschnitte der Rotorbleche vorgesehen, welche Kurzschlussstege bzw. Sättigungsstege bilden und hauptsächlich eine mechanisch tragende Funktion haben sollen. Vergleichbares gilt für die Veröffentlichung DE 20 2004 016 534 U1.

Auch die EP 1 855 370 A1 befasst sich mit der Konstruktion eines Rotorbleches, bei welchem die Ausnehmungen für die Permanentmagnete beidseitig hohle Abschnitte aufweisen, die eine spezielle Form besitzen, um den magnetischen Fluss in positiver Weise zu beeinflussen. Auch bei der insoweit bekannten Ausführungsform sind sämtliche Rotorbleche mit Kurzschlussstegen versehen.

Nachteilig bei der Konstruktion derartiger Rotoren mit zum Beispiel tangential ausgerichteten Magneten ist die Tatsache, dass die in erster Linie konstruktiv bedingten Kurzschlussstege bzw. Sättigungsstege einen Teil des magnetischen Flusses kurzschließen und folglich den Wirkungsgrad des Motors reduzieren, da die Permanentmagnete nicht optimal ausgenutzt werden.

Aus diesem Grunde sind auch Ausführungsformen bekannt, bei denen auf Kurzschlussstege zwischen benachbarten Polschuhabschnitten verzichtet wird. Derartige Ausführungsformen sind jedoch in stabilitätsmäßiger Hinsicht häufig nachteilig. Aus diesem Grunde schlägt die US 4 469 970 einen permanentmagnetischen Rotor vor, welcher aus einer Vielzahl von Blechen besteht, wobei einige Bleche vorgesehen sind, bei denen die Pohlschuhabschnitte mittels Kurzschlussstegen miteinander verbunden sind. Die Anbindung eines solchen Blechpaketes an die Rotorwelle erfolgt über endseitige Abschlusskappen. Im Übrigen sind die einzelnen Bleche des Blechpaketes mit einer Vielzahl von Bohrungen versehen, so dass die Bleche mit Hilfe von Verbindungsstangen miteinander gekoppelt werden. Ein solcher Aufbau ist verhältnismäßig aufwändig und weist lediglich eine begrenzte Stabilität auf.

Außerdem kennt man einen Rotor für einen Synchronmotor mit einer Mehrzahl von in radialer Orientierung angeordneten Permanentmagneten die um eine Welle herum angeordnet und in einer Umfangsrichtung abwechselnd magnetisiert sind. Das Blechpaket dieses Rotors setzt sich im Wesentlichen aus segmentförmigen Blechteilen zusammen, welche jeweils zwischen zwei radial ausgerichteten Magneten angeordnet sind. Ergänzend können einstückige Bleche vorgesehen sein, bei welchen einzelne Blechabschnitte über Stege miteinander verbunden sind. Dieser Rotor mit radial ausgerichteten Magneten in Spezialbauweise soll eine besonders hohe Stabilität aufweisen, um auch als Hochgeschwindigkeitsrotor einsetzbar zu sein (vgl. DE 694 09 889 T2).

Im Übrigen ist es bei der Konstruktion von Statoren bekannt, diese aus einer Vielzahl von Blechlamellen aufzubauen, wobei die einzelnen Blechlamellen Ausnehmungen oder dergleichen aufweisen, welche die Statorwicklungen aufnehmen sollen. In diesem Zusammenhang schlägt die DE 34 18 069 A1 vor, ein Blechpaket aus verschiedenen Gruppen von Lamellen zu schichten. Auf die Konstruktion und Ausgestaltung von Rotoren eines Elektromotors hatten derartige Entwicklungen keinen Einfluss. Permanent magnetische Rotoren mit eingebetteten Magneten und unterschiedlichen Blechformen sind Gegenstand der Dokumente DE 102005047771, DE 102006006882 und DE19915664.

Der Erfindung liegt die Aufgabe zugrunde, einen permanentmagnetischen Rotor für einen Elektromotor, vorzugsweise für einen Innenläufermotor, der eingangs beschriebenen Art zu schaffen, welcher bei einfachem und kostengünstigen Aufbau einen optimalen Wirkungsgrad erzielt und sich zugleich durch hohe Stabilität auszeichnet.

Diese Aufgabe wird durch die Merkmale der Ansprüche 1, 2, 4 and 15 gelöst. Die abhängigen Ansprüche definieren vorteilhafte Ausgestaltungen der Erfindung.

Die Verbindungsstege oder ein oder mehrere Stegabschnitte dieser Verbindungsstege können dabei während des Betriebes (zumindest zeitweise) magnetisch gesättigt sein und folglich Sättigungsstege bzw. Kurzschlussstege bilden. Die Erfindung geht dabei zunächst einmal von der Erkenntnis aus, dass es nicht erforderlich ist, sämtliche Bleche eines Rotors identisch auszugestalten und folglich sämtliche Bleche eines Rotors mit Verbindungs- oder Kurzschlussstegen zu versehen, sondern dass es vorteilhaft ist, mit unterschiedlichen Blechtypen zu arbeiten, wobei lediglich ein Teil der verwendeten Bleche mit Kurzschlussstegen ausgerüstet ist und bei einem anderen Teil der Bleche auf Kurzschlussstege verzichtet wird. Unterschiedliche Blechtypen meint im Rahmen der Erfindung insbesondere, dass diese Blechtypen unterschiedlich geformt sind und folglich (in der Draufsicht) eine unterschiedliche Form aufweisen. Die Bleche der unterschiedlichen Blechtypen sind jedoch in der Regel aus demselben Material und in derselben Dicke gefertigt. Die Erfindung umfasst jedoch auch Ausführungsformen, bei welchen die Bleche der verschiedenen Blechtypen eine unterschiedliche Dicke aufweisen und/oder aus unterschiedlichem Material gefertigt sind.

Dabei zeichnen sich insbesondere die die Haltebleche bildenden Rotorbleche durch hohe Stabilität aus, da die zentralen Jochblechabschnitte mit den äußeren Polschuhabschnitten über die Verbindungsstege miteinander verbunden sind. Damit gelingt auch eine einfache und zuverlässige Ankopplung der einzelnen Bleche und folglich des gesamten Blechpaketes an die Rotorwelle. Denn die einzelnen Bleche und insbesondere die Haltebleche weisen zentrale Jochblechabschnitte auf, welche mit zentralen Ausnehmungen versehen sind, in welche die Rotorwelle eingesteckt werden kann. Die Anbindung der Rotorwelle an die Bleche erfolgt demnach in einfacher Weise, zum Beispiel durch Presssitz, ohne dass endseitige Befestigungskappen vorgesehen sein müssen. Die Erfindung umfasst jedoch auch Ausführungsformen mit derartigen Endkappen.

Die Haltebleche weisen vorzugsweise jeweils eine oder mehrere Ausnehmungen auf, welche als Halteausnehmungen für die Magnete ausgebildet sind und in welche folglich die Magnete eingesetzt sind. Die Magnete sind dabei vorzugsweise (geometrisch) in tangentialer Richtung ausgerichtet, das heißt sie verlaufen in einer möglichen Ausführungsform im Querschnitt orthogonal oder im Wesentlichen orthogonal zu dem Radius des Rotors. Die Magnete können aber auch schräg unter einem vorgegebenen Winkel zu dem Radius des Rotors angeordnet sein, wobei bei einem mehrpoligen Rotor die einzelnen Magnete auch in unterschiedlichen Winkeln zu dem Radius angeordnet sein können. Jedenfalls werden Ausführungsformen umfasst, bei denen die Magnetisierungsrichtung der Magnete radial oder in etwa radial bzw. diametral oder auch schräg verläuft. Insgesamt verläuft die Magnetisierungsrichtung im Großen und Ganzen von innen nach außen oder umgekehrt von außen nach innen. Grundsätzlich umfasst die Erfindung aber auch Ausführungsformen, bei denen die Magnete (geometrisch) radial ausgerichtet sind und die Magnetisierungsrichtung demnach in etwa tangential verläuft.

Nach einer ersten Ausführungsform der Erfindung wird vorgeschlagen, dass ein oder mehrere Rotorbleche des zweiten Typs, das heißt Zwischenbleche, zwischen zwei axial beabstandeten Rotorblechen des ersten Typs, das heißt Haltebleche, angeordnet sind. Dabei kann es zweckmäßig sein, drei oder auch mehr Rotorbleche des zweiten Typs zwischen zwei axial beabstandeten Rotorblechen des ersten Typs anzuordnen. Die haltende Funktion der Rotorbleche für die Magnete wird dabei im Wesentlichen bzw. ausschließlich von den Rotorblechen des ersten Typs übernommen, da diese vorzugsweise geschlossene Ausnehmungen als Halterung für die zum Beispiel tangential orientierten Permanentmagnete aufweisen. Die Erfindung hat dabei erkannt, dass es ausreichend ist, wenn diese Haltefunktion nicht von sämtlichen Rotorblechen übernommen wird, sondern lediglich von einem Teil der Rotorbleche, zum Beispiel von jedem dritten, jedem vierten ... (bzw. jedem n-ten) Rotorblech. Auf diese Weise wird die Zahl der vorhandenen Verbindungsstege welche (bereichsweise bzw. abschnittsweise) als Kurzschlussstege wirken erheblich reduziert, so dass damit auch der Kurzschlussfluss reduziert wird und folglich die Ausnutzung der Permanentmagnete verbessert wird. Damit lässt sich insgesamt ein besserer Wirkungsgrad erzielen, ohne dass die Stabilität des Rotors darunter leidet.

Im Rahmen der Erfindung meint Rotorblech bzw. Rotorblechtyp stets ein in einer axialen Ebene angeordnetes Rotorblech. Bei der beschriebenen Ausführungsform sind folglich in einer Ebene entweder Rotorbleche mit Verbindungs- bzw. Kurzschlussstegen oder Rotorbleche ohne Verbindungs- bzw. Kurzschlussstege angeordnet, wobei vorzugsweise wesentlich mehr Rotorbleche ohne Kurzschlussstege verwendet werden, vorzugsweise zumindest zweimal so viele, besonders bevorzugt zumindest dreimal so viele. Insbesondere bei diesen Ausführungsformen kann es zweckmäßig sein, wenn die Rotorbleche des ersten Blechtyps (Haltebleche) einstückig bzw. einteilig gefertigt sind und folglich Ausnehmungen für sämtliche Permanentmagnete aufweisen, während die Rotorbleche des zweiten Blechtyps (Zwischenbleche) ohne die Kurzschlussstege und ohne Aufnahmetaschen oder dergleichen vorzugsweise mehrteilig ausgebildet sind. Diese mehrteiligen Zwischenbleche werden im Zuge der Montage dann zwischen den Rotorblechen des ersten Blechtyps, welche Haltebleche für die Magnete und insbesondere auch für die übrigen Bleche bilden, gehalten bzw. fixiert.

Die Erfindung umfasst nach einem weiteren Vorschlag mit selbständiger Bedeutung jedoch auch Ausführungsformen, bei welchen das Blechpaket zumindest Rotorbleche eines (ersten) Blechtyps aufweist, welche jeweils mehrteilig ausgebildet sind und zumindest ein (separates) erstes Blechteil als Halteblechteil mit einer oder mehreren Ausnehmungen aufweisen, welches einen (zentralen) Jochblechabschnitt aufweist, der mit einer Rotorwelle verbunden oder verbindbar ist und einen oder mehrere äußere Polschuhabschnitte aufweist, die über einen oder mehrere Verbindungsstege oder Stegabschnitte mit dem Jochblechabschnitt verbunden sind und andererseits zumindest ein zweites Blechteil ohne Verbindungsstege (und ohne Ausnehmungen) aufweist. Bei dieser Ausführungsform bildet ein in einer axialen Ebene angeordnetes Rotorblech folglich nicht ein Halteblech für sämtliche Permanentmagnete, sondern lediglich ein Halteblech bzw. Halteblechteil für einen Teil der Permanentmagneten oder gegebenenfalls auch nur einen einzigen Permanentmagneten. Bei dieser Ausführungsform ist es dann zweckmäßig, wenn zwei in axialer Richtung (gegebenenfalls beabstandet) hintereinander angeordnete Bleche dieses (ersten) mehrteiligen Blechtyps um einen vorgegebenen Winkel versetzt zueinander angeordnet sind. Auch bei dieser Ausführungsform kann es zweckmäßig sein, zwischen den einzelnen Blechen des ersten Blechtyps, welche nacheinander um einen vorgegebenen Winkel gedreht zueinander angeordnet sind, ein oder mehrere Rotorbleche des zweiten Blechtyps ohne Verbindungs- bzw. Kurzschlussstege vorzusehen. Die Erfindung umfasst jedoch auch Ausführungsformen, bei welchen das Blechpaket ausschließlich aus Rotorblechen dieses mehrteiligen (ersten) Blechtyps aufgebaut ist, wobei dann von besonderer Bedeutung ist, dass diese Bleche aus einerseits zumindest einem Halteblechteil mit Verbindungs- bzw. Kurzschlussstegen und andererseits zumindest einem davon separaten Blechteil ohne Verbindungs- bzw. Kurzschlussstege besteht. Der (geometrische) Winkel, um welche die einzelnen Rotorbleche dieses ersten Blechtyps zueinander gedreht angeordnet werden, hängt von der Polzahl der Rotors ab. Bei einem vierpoligen Rotor kann es zweckmäßig sein, die Rotorbleche jeweils um 90° zu drehen. Bei einem sechspoligen Motor empfiehlt sich ein Winkel von 60° usw.. Es kann auch jeweils ein Vielfaches dieser Winkel gewählt werden. Besonders vorteilhaft bei dieser Ausführungsform mit einem einzigen Blechtyp ist die Tatsache, dass im Zuge der Fertigung mit einem einzigen Stanzwerkzeug gearbeitet werden kann, da sämtliche Rotorbleche identisch ausgebildet sind und im Zuge der Montage lediglich um einen bestimmten Winkel verdreht zueinander montiert werden. Dennoch werden die eingangs beschriebenen Vorteile erreicht.

Die Rotorbleche des ersten Blechtyps oder die ersten Blechteile der Rotorbleche des ersten Blechtyps sind im Rahmen der Erfindung wie erläutert vorzugsweise als Haltebleche für die Magnete mit jeweils einer oder mehreren Ausnehmungen für die Magnete ausgebildet. Die (geschlossenen) Ausnehmungen sind dabei zumindest bereichsweise von Verbindungs- und/oder Kurzschlussstegen begrenzt. Diese als Haltebleche ausgebildeten Rotorbleche oder Rotorblechteile weisen vorzugsweise einen zentralen Abschnitt auf, welcher mit einer Rotorwelle verbunden oder verbindbar ist. Ferner weisen die als Haltebleche ausgebildeten Rotorbleche oder Rotorblechteile jeweils einen oder mehrere äußere bzw. außenumfangsseitige Polschuhabschnitte auf. Dabei sind der oder die Polschuhabschnitte über einen oder mehrere Verbindungsstege mit dem zentralen Jochblechabschnitt verbunden. Außerdem können jeweils zwei benachbarte Polschuhabschnitte über zumindest einen Verbindungs- oder Kurzschlusssteg miteinander verbunden sein. Diese Haltebleche, welche die Ausnehmungen für die Magnete und folglich auf die Kurzschlussstege aufweisen, übernehmen folglich im Wesentlichen die tragende Funktion des Blechpaketes.

Demgegenüber sind die Rotorbleche des zweiten Blechtyps als Zwischenbleche ausgebildet, welche vorzugsweise zwischen zwei axial beabstandeten Halteblechen fixiert werden. Diese Zwischenbleche des zweiten Blechtyps, welche folglich vollständig ohne Verbindungs- und Kurzschlussstege ausgebildet sind, können vorzugsweise mehrteilig ausgebildet sein und aus mehreren separaten Blechteilen bestehen. Diese separaten Blechteile können unter anderem Polschuhbleche bilden. Dabei ist es zweckmäßig, wenn diese mehrteiligen Rotorbleche des zweiten Blechtyps zumindest ein zentrales Jochblechteil aufweisen, welches als Joch auf eine Rotorwelle aufsetzbar ist oder aufgesetzt ist und darüber hinaus ein oder mehrere außenumfangseitige Polschuhblechteile aufweist, welche ohne Verbindung zu dem zentralen Jochblechteil auf der Außenseite des Magneten angeordnet ist. Diese außenumfangseitigen Polschuhblechteile bilden folglich die Polschuhe des montierten Rotors, wobei diese Polschuhblechteile dann vorzugsweise mit den entsprechenden Polschuhabschnitten der Haltebleche fluchten. Die Magnete sind im Bereich dieser Zwischenbleche zwischen dem zentralen Jochblechteil und dem äußeren Polschuhblechteil angeordnet, wobei jedoch diese Blechteile von benachbarten Blechteilen und insbesondere auch benachbarten Halteblechen gehalten werden, mit denen sie verbunden sind. Ein Joch (bzw. Jochblechteil oder Jochblechabschnitt), welches insbesondere der Ankopplung der Bleche an die Welle dient, ist also ein ferromagnetisches Teil, welches mindestens zwei unterschiedliche magnetische Pole (magnetisch) miteinander verbindet, wobei ein Pol auch aus gleichnamigen Polen zusammengesetzt sein kann. Es können folglich mehrere Magnete in einer Tasche bzw. Ausnehmung angeordnet sein. Im Übrigen müssen nicht sämtliche Taschen gefüllt sein.

Die an den Rotorblechen des ersten Blechtyps angeordneten Verbindungsstege können beispielsweise im Wesentlichen T-förmig oder auch L-förmig ausgebildet sein und einen radial ausgerichteten ersten Stegabschnitt sowie einen tangential ausgerichteten und folglich in etwa orthogonal zu dem ersten Stegabschnitt ausgerichteten zweiten Stegabschnitt aufweisen. Eine T-förmige Ausgestaltung der Verbindungsstege bietet sich insbesondere bei den Halteblechen an, wobei ein solcher T-förmiger Verbindungssteg dann mit seinem ersten tangentialen Stegabschnitt zwei benachbarte Polschuhabschnitte verbindet. Der dazu orthogonal angeordnete zweite Stegabschnitt verbindet dann den tangentialen ersten Stegabschnitt mit dem zentralen Jochblechabschnitt. Bei einer solchen Ausführungsform bildet der tangentiale erste Stegabschnitt einen Kurzschlusssteg bzw. Sättigungssteg, da er (stets) Bereiche mit unterschiedlichem magnetischem Potenzial miteinander verbindet und folglich (dauerhaft) magnetisch gesättigt ist. Demgegenüber bildet der radial ausgerichtete Stegabschnitt bei einer solchen T-förmigen Ausführungsform im Wesentlichen (lediglich) einen Verbindungssteg, welcher während des Betriebs in bestimmten Winkelstellungen flussfrei ist. Die Erfindung umfasst aber auch Ausführungsformen, bei denen die Haltebleche nicht mit T-förmigen Verbindungsstegen ausgestattet sind und bei denen beispielsweise auf tangential orientierte Kurzschlussstegabschnitte vollständig verzichtet wird. So besteht beispielsweise die Möglichkeit, dass der zentrale Jochblechabschnitt über Verbindungsstege nicht mittelbar bzw. indirekt über einen tangentialen Stegabschnitt mit dem Jochblechabschnitt verbunden ist, sondern unmittelbar bzw. direkt über einen oder mehrere (einfache) Verbindungsstege. So schlägt die Erfindung bei einer alternativen Ausführungsform vor, dass die Verbindungsstege als einfache gerade oder im Wesentlichen gerade Stege ausgebildet sind, welche einen Jochblechabschnitt und einen Polschuhabschnitt (direkt) miteinander verbinden. Derartige Stege weisen gleichsam eine I-Form auf. Diese geraden Stege können ebenfalls tangential oder im Wesentlichen tangential, vorzugsweise jedoch unter einem vorgegebenen Winkel schräg zum Radius angeordnet sein und beispielsweise die Eckbereiche eines Jochblechabschnittes mit den Eckbereichen oder Randbereichen eines Polschuhblechabschnittes verbinden. Bei dieser Ausführungsform besteht dann die Möglichkeit, dass die zwei benachbarten Polschuhblechabschnitten zugeordneten benachbarten (geraden) Stege V-förmig unter einem vorgegebenen Winkel zueinander angeordnet sind, welcher kleiner als 90°, aber auch größer oder gleich 90° sein kann.

Ein L-förmiger Verbindungssteg bietet sich insbesondere bei Ausführungsformen mit einem Halteblechteil an, welches lediglich Ausnehmungen für einen Teil der Magnete aufweist. Dann kann es zweckmäßig sein, einen Polschuhabschnitt eines solchen Halteblechteils über einen L-förmigen Verbindungssteg bzw. zwei L-förmige Verbindungsstege mit dem zentralen Jochblechabschnitt zu verbinden, wobei ein solcher L-förmiger Verbindungssteg dann einen tangential verlaufenden ersten Stegabschnitt und einen dazu orthogonal angeordneten und im Wesentlichen radial verlaufenden zweiten Stegabschnitt aufweist. Bei dieser Ausführungsform bilden die beiden Stegabschnitte und folglich der gesamte Verbindungssteg einen Kurzschlusssteg bzw. Sättigungssteg. Auch bei diesen Ausführungsformen, bei denen ein Halteblechteil jeweils für die Aufnahme lediglich eines Teils der Magnete vorgesehen ist, kann mit einfachen oder geraden Stegen gearbeitet werden, welche den Jochblechabschnitt direkt mit dem Polschuhabschnitt verbinden. Auch bei dieser Ausführungsform sind dann diese geraden bzw. einfachen Stege in etwa radial oder vorzugsweise unter einem vorgegebenen Winkel zu dem Radius angeordnet.

Optional schlägt die Erfindung vor, dass die Zwischenbleche oder Teile der Zwischenbleche, z. B. die Jochblechteile eine oder mehrere Montagenasen aufweisen, welche die Handhabung der Zwischenbleche und insbesondere der Jochblechteile im Zuge der Montage vereinfachen bzw. optimieren sollen. Diese Montagenasen sind vorzugsweise außenumfangsseitig an die Zwischenbleche, z. B. außenumfangsseitig an die Jochblechteile angeformt und z. B. radial nach außen orientiert. Denn im Zuge der Herstellung bzw. Montage eines Rotorpakets aus einzelnen Rotorblechen muss vermieden werden, dass sich insbesondere bei den Zwischenblechen die nicht mit den äußeren Polschuhblechteilen verbundenen Jochblechteile gegenüber den Polschuhblechteilen verdrehen. Eine außenumfangsseitig angeformte Montagenase, welche aus magnetischer Sicht grundsätzlich entbehrlich ist, vereinfacht die Handhabung. Grundsätzlich ist es ausreichend, lediglich eine Montagenase vorzusehen. Aus Symmetriegründen ist es fertigungstechnisch jedoch zweckmäßig, eine Vielzahl von Montagenasen vorzusehen, die symmetrisch über den Umfang der Jochblechteile verteilt sind. Besonders bevorzugt sind die Montagenasen derart an die Jochblechteile angeformt, dass sie zwischen zwei benachbarten Polschuhblechteilen angeordnet sind und im montierten Zustand vorzugsweise mit einem Verbindungssteg oder einem Abschnitt eines Verbindungssteges fluchten. Die Jochblechteile der Zwischenbleche sind in der Regel mehreckig ausgebildet und weisen vorzugsweise die Form eines regelmäßigen Mehrecks auf. In diesem Fall sind die Haltenasen vorzugsweise in den Ecken dieses Mehrecks angeordnet. Bei einem z. B. sechspoligen Rotor mit sechs Magneten sind die Jochblechteile der Zwischenbleche z. B. sechseckig ausgebildet, so dass z. B. sechs Montagenasen in den sechs Ecken des Sechsecks angeordnet sind. Entsprechendes gilt für einen vierpoligen Rotor mit viereckigen Jochblechteilen oder auch einen achtpoligen Magneten mit achteckigen Jochblechteilen.

Die Polschuhe bzw. Polschuhabschnitte können eine Breite aufweisen, welche in etwa der (im Querschnitt betrachteten) Breite der Magnete entspricht oder geringer ist. Dieses führt zu einer Optimierung des Feldes, insbesondere im Hinblick auf einen möglichst sinusförmigen Verlauf. Die Erfindung umfasst jedoch auch Ausführungsformen, bei denen die Polschuhe bzw. Polschuhabschnitte breiter sind als die Magnete, das heißt, die Magnete sind schmaler als die Polschuhe bzw. Polschuhabschnitte. Dieses führt zu einer Materialeinsparung bei den Magneten.

Die magnetische Flusskonzentration lässt sich durch entsprechende Formung der einzelnen Polschuhbleche oder Polschuhabschnitte erreichen. Diese erlauben eine Beeinflussung der Längs- und Querinduktivitäten und damit eine Optimierung, z. B. im Hinblick auf einen sensorlosen Betrieb bei sehr kleinen Drehzahlen oder bei Drehzahl null. Dabei kann es zweckmäßig sein, über den Umfang des Rotors einen "variablen" und folglich nicht konstanten Luftspalt vorzusehen. Dieses kann zur Minimierung der Rastmomente und Optimierung des Drehmomentes ausgenutzt werden.

Nach einem weiteren Vorschlag ist vorgesehen, dass die Ausnehmungen in den Blechen größer als die Querschnittsfläche der Magnete sind, so dass bei in die Ausnehmungen eingesetzten Magnete einseitig oder beidseitig der Magnete Hohlräume gebildet sind. Diese Hohlräume ermöglichen durch ihre Formgebung ebenfalls eine Beeinflussung der Flussdichte, so dass das Rastmoment gezielt vorgegeben werden kann. Die Form der Verbindungsstege bzw. Kurzschlussstege und der Hohlräume kann so gewählt werden, dass die Stege magnetisch sättigen.

Es wurde bereits erläutert, dass die Polschuhabschnitte und/oder Polschuhblechteile eine Breite aufweisen können, die in etwa der Breite der Magnete entspricht oder größer als die Breite der Magnete ist. Insbesondere bei einer solchen Ausführungsform schlägt die Erfindung in bevorzugter Weiterbildung vor, dass an die Polschuhabschnitte und/oder die Polschuhblechteile Haltestege angeformt sind, welche die Magnete im montierten Zustand umgreifen. Mit Hilfe dieser Haltestege, die vorzugsweise beidseitig der Magnete angeordnet sind, wird eine sichere Fixierung der Magnete innerhalb der Ausnehmungen gewährleistet. Dennoch können beidseitig der Magnete die oben beschriebenen Hohlräume gebildet werden.

Im Zuge der Herstellung werden die einzelnen Rotorbleche in axialer Richtung adhäsiv, stoffschlüssig, formschlüssig und/oder kraftschlüssig miteinander verbunden. Die Herstellung kann im Wege der Stanzpaketierung erfolgen. Die Verbindung kann folglich durch Stanznoppen und/oder durch Kleben oder alternativ oder ergänzend auch durch Umspritzen erreicht werden. Auch Schweißverbindungen sind nicht ausgeschlossen. Jedenfalls wird im Rahmen der Erfindung gewährleistet, dass die tragende Funktion zunächst einmal im Wesentlichen von den Rotorblechen des ersten Blechtyps (Haltebleche) übernommen wird, welche Verbindungs- und/oder Kurzschlussstege und folglich vorzugsweise auch Ausnehmungen für die Permanentmagnete aufweisen. Diese Rotorbleche des ersten Blechtyps sind folglich (zumindest bereichsweise oder zumindest teilweise) als Haltebleche für die Permanentmagnete und die übrigen Bleche ausgebildet. Die Rotorbleche des zweiten Blechtyps oder auch Teile der Rotorbleche des ersten Blechtyps, welche keine Verbindungsstege aufweisen, können als Zwischenbleche in axialer Richtung zwischen den Rotorblechen des ersten Blechtyps fixiert werden. Die mit Verbindungs- oder Kurzschlussstegen ausgeführten Bleche oder Blechteile werden folglich zur Befestigung der (mehrteiligen) Bleche oder Blechteile herangezogen, welche keine Stege aufweisen und im Wesentlichen die Polschuhe bilden. Die mechanische Festigkeit wird insbesondere durch die Haltebleche oder Halteblechteile erreicht, wobei von besondere Bedeutung ist, dass die zentralen Jochblechabschnitte zur Erhöhung der Stabilität insbesondere gegen Fliehkräfte über zum Beispiel radial ausgerichtete Verbindungsstege oder Stegabschnitte mit den äußeren Polschuhabschnitten direkt oder indirekt verbunden sind.

In einer abgewandelten Ausführungsform der Erfindung mit im Wesentlichen radial oder schräg bezogen auf den Radius des Rotors orientierten Magneten, bei welcher die Rotorbleche mehrere zwischen den Magneten angeordneten Polschuhabschnitte aufweisen und bei denen jeweils zwei benachbarte Polschuhabschnitte über zumindest einen Verbindungssteg miteinander verbunden sind, schlägt die Erfindung vor, dass das Blechpaket aus zumindest zwei verschieden geformten Rotorblechtypen zusammengesetzt ist, wobei der Rotor einerseits ein oder mehrere Rotorbleche eines ersten Blechtyps aufweist, bei welchen zwei benachbarte Polschuhabschnitte über außenumfangsseitige Verbindungsstege verbunden sind, die die Ausnehmung für die Permanentmagneten außenseitig begrenzen und dass der Rotor andererseits ein oder mehrere Rotorbleche eines zweiten Blechtyps aufweist, bei welchen zwei benachbarte Polschuhabschnitte über innenumfangsseitige Verbindungsstege verbunden sind, die die Ausnehmung für die Permanentmagnete innenseitig begrenzen. Auch auf diese Weise wird die Anzahl der Verbindungsstege und folglich der Sättigungsstege bzw. Kurzschlussstege verringert, so dass ein hoher Wirkungsgrad des Motors erreicht wird. Dennoch zeichnet sich das Rotorblechpaket durch eine hohe Stabilität aus, da die einzelnen Rotorbleche entweder außenseitige oder innenseitige Verbindungsstege aufweisen, so dass durch geeignetes Stapeln dieser unterschiedlichen Blechtypen eine stabile Ausführungsform mit Aufnahmetaschen für die Permanentmagnete gebildet wird. Die außenseitigen Verbindungsstege und/oder die innenseitigen Verbindungsstege verlaufen dabei in im Wesentlichen tangentialer Richtung. Die innenseitigen Verbindungsstege eines Rotorblechs bilden dabei (gemeinsam) einen die Rotorwelle umgebenden Ring. Auf diese Weise wird außerdem die Befestigung der Welle an dem Blechpaket vereinfacht. Die Herstellung erfolgt auch bei dieser Ausführungsform vorzugsweise im Wege der Stanzpaketierung.

Zur Erhöhung der Stabilität kann es bei den beschriebenen unterschiedlichen Ausführungsformen der Erfindung zweckmäßig sein, den Rotor bzw. das Rotorblechpaket zu umspritzen, zum Beispiel mit einem Kunstharz oder Kunststoff. Dieses führt insbesondere zur Erhöhung der Festigkeit. Die beim Stand der Technik vorgesehenen Endkappen können entfallen.

Die Rotorwelle kann in an sich bekannter Weise ferromagnetisch ausgeführt sein. Damit lässt sich das Rotorjoch beim magnetischen Fluss unterstützen.

Die Erfindung umfasst auch einen Elektromotor mit zumindest einem Stator und mit zumindest einem Rotor der beschriebenen Art. Der beschriebene Rotor wird folglich nicht nur selbständig, sondern insbesondere auch in Kombination mit einem geeigneten Stator unter Schutz gestellt. In diesem Zusammenhang ist von besonderer Bedeutung, dass der erfindungsgemäße Rotor mit verschiedensten Statortypen zusammengefasst werden kann. Besonders eignet sich der erfindungsgemäße Rotor für Statoren mit Zahnspulentechnik.

Der Rotor kann z. B. vier bis zehn Magnete aufnehmen und folglich vierpolig bis zehnpolig, z. B. vierpolig, sechspolig oder achtpolig ausgebildet sein. Es werden jedoch auch Ausführungsformen mit abweichender Polzahl umfasst.

Im Folgenden wird die Erfindung anhand von lediglich Ausführungsbeispiele darstellenden Zeichnungen näher erläutert. Es zeigen
- **Fig. 1**: ein Blechpaket für einen erfindungsgemäßen Permanentmagnetischen Rotor in einer ersten Ausführungsform in perspektivischer Darstellung,
- **Fig. 2**: ein Rotorblech des ersten Blechtyps des Rotors nach Fig. 1,
- **Fig. 3**: ein Rotorblech des zweiten Blechtyps des Rotors nach Fig. 1,
- **Fig. 4**: ein Blechpaket in abgewandelter Ausführungsform in perspektivischer Darstellung,
- **Fig. 5**: ein Rotorblech des ersten Blechtyps des Rotors nach Fig. 4,
- **Fig. 6**: ein Rotorblech des zweiten Blechtyps des Rotors nach Fig. 4,
- **Fig. 7**: einen vereinfachten Querschnitt durch einen Elektromotor mit einem Rotor mit Blechpaket nach Fig. 4,
- **Fig. 8**: ein Rotorblech des ersten Blechtyps (gemäß Fig. 2) in abgewandelter Ausführungsform und
- **Fig. 9**: ein Rotorblech des ersten Blechtyps (gemäß Fig. 5) in einer weiteren Ausführungsform,
- **Fig. 10**: ein Rotorblech eines ersten Blechtyps für einen Rotor in einer weiteren Ausführungsform,
- **Fig. 11**: ein Rotorblech eines zweiten Blechtyps für einen Rotor entsprechend Fig. 10,
- **Fig. 12**: ein Blechpaket in einer abgewandelten Ausführungsform in perspektivischer Darstellung,
- **Fig. 13**: ein Rotorblech des ersten Blechtyps des Blechpaketes nach Fig. 12 und
- **Fig. 14**: ein Rotorblech des zweiten Blechtyps des Blechpakets nach Fig. 12.

In den Figuren ist (jeweils ausschnittsweise) ein permanentmagnetischer Rotor 2 für einen Elektromotor in der Ausführungsform als Innenläufermotor dargestellt. Ein solcher Rotor 2 weist ein Blechpaket 3 aus mehreren in axialer Richtung gestapelten Rotorblechen 4, 4', 5 auf. Einige der Rotorbleche oder alle Rotorbleche weisen Ausnehmungen 6 auf. Die Rotorbleche werden zu dem Blechpaket 3 paketiert bzw. gestapelt, so dass die Ausnehmungen 6 dann in ihrer Gesamtheit Aufnahmetaschen 7 für Permanentmagnete 8 bilden, welche in die Aufnahmetaschen 7 eingesetzt werden bzw. eingesetzt sind.

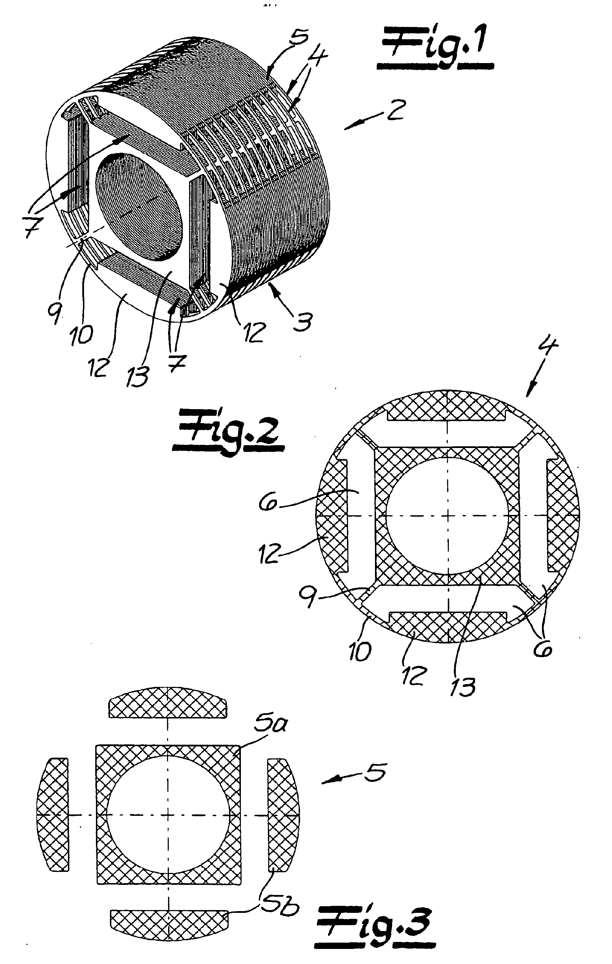

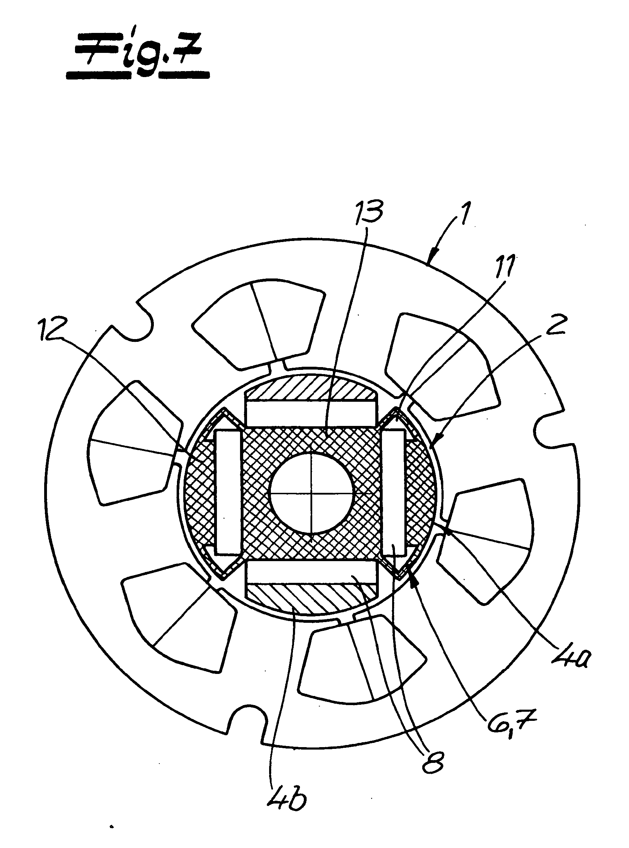

Die Magnete sind bei den Ausführungsformen nach Fig. 1 bis 11 (im Querschnitt) im Wesentlichen (geometrisch) in tangentialer Richtung ausgerichtet, das heißt sie verlaufen in der z. B in Fig. 2 gezeigten Querschnittsdarstellung orthogonal oder im Wesentlichen orthogonal zum Radius. Während die Fig. 1 bis 6 lediglich die Blechpakete 3 bzw. Teile der Blechpakete 3 ohne Magnete zeigen, deutet Fig. 7 in vereinfachter Darstellung beispielhaft den Aufbau eines Motors mit einem solchen Rotor 2 mit Blechpaket 3 und Magneten 8 an.

In den Ausführungsbeispielen nach Fig. 1 bis 11 besteht das Blechpaket 3 aus zumindest zwei verschieden geformten Rotorblechtypen. Es werden einerseits mehrere Rotorbleche 4 bzw. 4' eines ersten Rotorblechtyps verwendet, bei welchen im Bereich eines Magneten 8 und/oder zwischen zwei benachbarten Magnete 8 ein oder mehrere Verbindungsstege 9, 9', 10 angeordnet sind. Andererseits werden mehrere Rotorbleche 5 eines zweiten Rotorblechtyps ohne derartige Verbindungsstege verwendet. Auf diese Weise soll im Rahmen der Erfindung insgesamt die Anzahl der verwendeten Verbindungsstege bzw. Kurzschlussstege reduziert werden. Damit reduziert sich auch der Kurzschlussfluss, so dass die Permanentmagnete 8 besser ausgenutzt werden und folglich ein höherer Wirkungsgrad erzielt wird.

Dieses soll beispielhaft zunächst anhand einer ersten Ausführungsform gemäß Fig. 1 bis 3 erläutert werden. Eine vergleichende Betrachtung der Fig. 1 bis 3 zeigt, dass das Blechpaket 3 aus zwei verschieden geformten Blechtypen zusammengesetzt wird. Es werden einerseits Rotorbleche 4 (gemäß Fig. 2) und andererseits Rotorbleche 5 (gemäß Fig. 3) verwendet. Die Rotorbleche 4 weisen die Ausnehmungen 6 für die einzusetzenden und in den Figuren nicht dargestellten Magnete 8 auf. Diese Rotorbleche 4 übernehmen bei diesem Ausführungsbeispiel folglich die Funktion von Halteblechen 4. Sie sind in diesem Ausführungsbeispiel einstückig gefertigt. Sie bestehen dabei aus einem zentralen Jochblechabschnitt 13, welcher als Joch mit der (nicht dargestellten) Rotorwelle verbunden wird und den Polschuhabschnitten 12, welche die magnetischen Polschuhe bilden. Ferner sind die Verbindungsstege 9, 10 erkennbar, welche unter Bildung der Ausnehmungen 6 die Polschuhabschnitte 12 einerseits miteinander sowie andererseits mit dem zentralen Jochblechabschnitt 13 verbinden. Fig. 1 macht deutlich, dass zwischen zwei axial beabstandeten Rotorblechen 4 des ersten Rotorblechtyps (und folglich Haltebleche) mehrere und vorzugsweise zumindest drei Rotorbleche 5 des zweiten Blechtyps angeordnet sind, welche Zwischenbleche bilden. Fig. 3 macht dabei deutlich, dass diese Zwischenbleche 5 mehrteilig ausgebildet sind und aus mehreren separaten Blechteilen 5a, 5b bestehen. Dabei weist jedes Zwischenblech 5 ein zentrales Jochblechteil 5a auf, welches als Joch mit der nicht dargestellten Rotorwelle verbunden wird. Dieses zentrale Jochbelechteil 5a fluchtet folglich nach erfolgter Montage mit dem zentralen Jochblechabschnitt 13 des Halteblechs 4. Ferner weisen die Zwischenbleche 5 mehrere außenumfangseitige Pohlschuhblechteile 5b auf, welche ohne Verbindung zu dem zentralen Blechteil 5a auf der Außenseite des nicht dargestellten Magneten angeordnet sind. Diese Blechteile 5b bilden folglich ebenfalls Polschuhe bzw. Polschuhbleche 5b. Folglich fluchten diese PolschuhBlechteile 5b nach erfolgter Montage mit den Polschuhabschnitten 12 der Haltebleche 4. Dies ergibt sich aus einer vergleichenden Betrachtung der Fig. 1 bis 3. Nach einer entsprechenden Paketierung gemäß Fig. 1 können dann die Magnete eingesetzt werden. Im Übrigen ist erkennbar, dass die Verbindungsstege 9, 10 in dem Ausführungsbeispiel nach Fig. 1 bis 3 im Wesentlichen T-förmig ausgebildet sind und einen radial ausgerichteten ersten Stegabschnitt 9 sowie einen tangential ausgerichteten zweiten Stegabschnitt 10 aufweisen. Der tangentiale erste Stegabschnitt 10 verbindet zwei benachbarte Polschuhabschnitte 12 miteinander. Er wirkt dabei als Kurzschlusssteg. Im Übrigen werden die Polschuhabschnitte 12 über einerseits den tangentialen ersten Stegabschnitt 10 und den radialen zweiten Stegabschnitt 9 mit dem zentralen Abschnitt 13 verbunden, so dass die Bleche 4 insgesamt die beschriebene tragende Funktion übernehmen können und folglich als Haltebleche ausgebildet sind. Demgegenüber sind die "losen" Blechteile 5a und 5b der Bleche 5 zwischen den Halteblechen 4 fixiert. Es wird folglich deutlich, dass bei dem erfindungsgemäßen Blechpaket die Anzahl der Kurzschlussstege deutlich reduziert wird. Dennoch zeichnet sich die Erfindung durch einen einfachen und kostengünstigen sowie stabilen Aufbau aus. Denn insbesondere durch die Verbindung der zentralen Jochblechabschnitte 13 mit den äußeren Polschuhabschnitten 12 über die Verbindungsstege 9, 10 und insbesondere die radial ausgerichteten Stegabschnitte 9 wird eine hohe Stabilität insbesondere in Bezug auf Fliehkräfte erreicht.

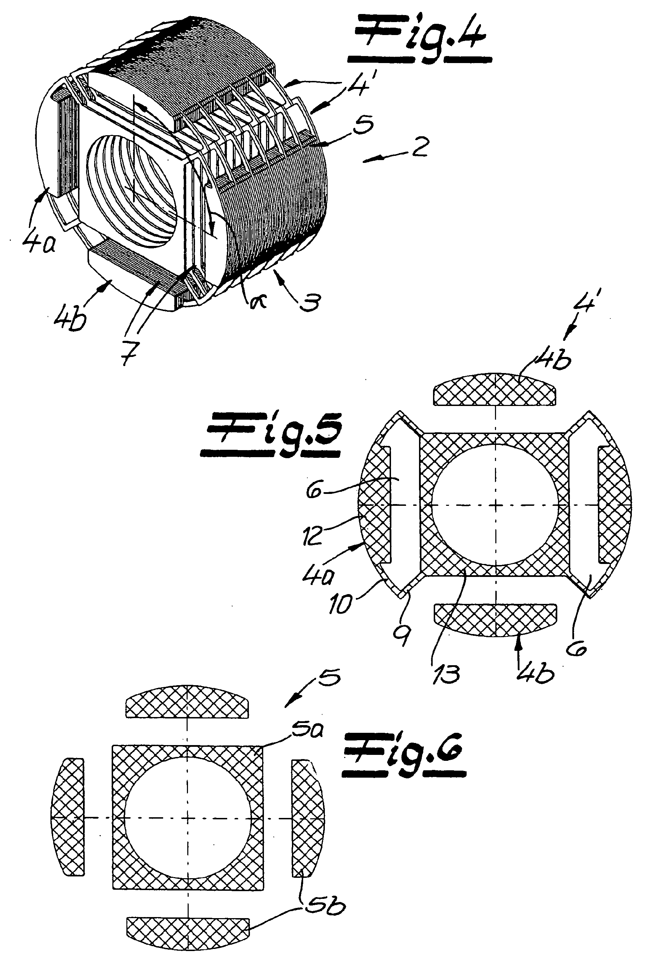

Dieses gilt auch für die zweite Ausführungsform nach den Fig. 4 bis 6, bei welcher die Magnete ebenfalls geometrisch in tangentialer Richtung ausgerichtet sind. Auch bei dieser Ausführungsform werden einerseits Bleche 4' eines ersten Blechtyps verwendet, welche Verbindungsstege 9, 10 aufweisen und andererseits Bleche 5 eines zweiten Blechtyps ohne Verbindungsstege. Im Gegensatz zu der Ausführungsform nach den Fig. 1 bis 3 sind bei dieser Ausführungsform die Bleche 4' des ersten Blechtyps jedoch nicht einstückig ausgebildet und sie weisen folglich nicht Halteausnehmungen bzw. Aufnahmetaschen für sämtliche Magnete auf. Vielmehr macht Fig. 5 deutlich, dass auch die Rotorbleche 4' des ersten Blechtyps bei dieser Ausführungsform mehrteilig ausgebildet sind und ein erstes Blechteil 4a als Halteblechteil aufweisen, welches mit Verbindungsstegen 9, 10 und folglich auch Ausnehmungen 6 für die Magnete ausgerüstet ist und mehrere zweite Blechteile 4b, welche ohne Kurzschlussstege ausgebildet sind. Die Verbindungsstege 9, 10 sind bei dieser Ausführungsform im Wesentlichen L-förmig ausgebildet. Sie weisen ebenfalls einen radialen Stegabschnitt 9 und einen tangentialen Stegabschnitt 10 auf, wobei bei dieser Ausführungsform der gesamte Verbindungssteg mit beiden Stegabschnitten 9 und 10 magnetisch gesättigt ist und folglich einen Kurzschlusssteg bildet. Eine vergleichende Betrachtung der Fig. 4 bis 6 macht deutlich, dass bei dieser Ausführungsform jeweils zwei in axialer Richtung hintereinander angeordnete Rotorbleche 4' des ersten Blechtyps um einen vorgegebenen Winkel α versetzt bzw. gedreht zueinander angeordnet sind. Dieser geometrische Winkel α beträgt im Ausführungsbeispiel 90°. Es handelt sich um einen vierpoligen Rotor 2. Die Blechteile 4a der Bleche 4' bilden also auch bei dieser Ausführungsform Haltebleche mit Ausnehmungen 6 für jedoch lediglich einen Teil der Magnete. Durch die "gedrehte" Anordnung wird dann die Fixierung sämtlicher Magnete realisiert (vgl. Fig. 4). Die Rotorbleche 4' weisen dabei wiederum einen zentralen Abschnitt 13 für die Befestigung der Welle sowie zwei Polschuhabschnitte 12 auf, welche über die Kurzschlussstege 9, 10 mit dem zentralen Abschnitt 13 verbunden sind. Ergänzend sind dann die in Fig. 5 dargestellten Blechteile 4b der Bleche 4' vorgesehen, welche nicht mit dem Blechteil 4a verbunden sind. Dabei zeigt Fig. 4, dass zwischen den Blechteilen 4a der Bleche 4' die Zwischenbleche 5, das heißt die Blechteile 5a und 5b, wie auch die Blechteile 4b gehalten werden. Eine vergleichende Betrachtung der Fig. 5 und 6 macht deutlich, dass bei einer solchen Ausführungsform die Möglichkeit besteht, sowohl das Blech 4' als auch das Blech 5 mit einem einzigen Stanzwerkzeug herzustellen. Mit dem Stanzwerkzeug kann in einem einzigen Stanzvorgang zunächst einmal das Blech gemäß Fig. 5 gestanzt werden. Sollen darüber hinaus Bleche gemäß Fig. 6 gestanzt werden, so kann zunächst ein erster Stanzvorgang (entsprechend Fig. 5) vorgenommen werden und anschließend das Blech bzw. das Stanzwerkzeug um zum Beispiel 90° gedreht werden und mit demselben Stanzwerkzeug ein weiterer Stanzvorgang vorgenommen werden, so dass dann die Gestaltung gemäß Fig. 6 entsteht.

Die Fig. 4 bis 6 machen im Übrigen deutlich, dass im Rahmen einer weiteren, nicht explizit dargestellten Ausführungsform auch die Möglichkeit besteht, ein Blechpaket 3 ausschließlich aus Blechen 4' des in der Fig. 5 dargestellten Blechtyps aufzubauen. Dann werden jeweils zwei benachbarte Bleche 4' um zum Beispiel 90° gedreht zueinander angeordnet, so dass das Blechpaket im Gegensatz zu den dargestellten Ausführungsformen nicht aus Blechen unterschiedlichen Blechtyps aufgebaut ist, sondern aus Blechen eines einzigen Blechtyps, wobei diese Bleche 4' jedoch gemäß Fig. 5 mehrteilig ausgebildet sind und einerseits Blechteile 4a mit Kurzschlussstegen und andererseits Blechteile 4b ohne Kurzschlussstege aufweisen. Dieses lässt sich nicht nur bei vierpoligen Rotoren, sondern auch bei Rotoren mit mehr als vier Polen realisieren, wobei dann die benachbarten Bleche 4' um ein entsprechend geeigneten Winkel verdreht zueinander angeordnet sind. Auch bei dieser Ausführungsform besteht die Möglichkeit, die Bleche gemäß Fig. 5 mit einem einzigen Stanzvorgang und folglich einem einzigen Stanzwerkzeug herzustellen.

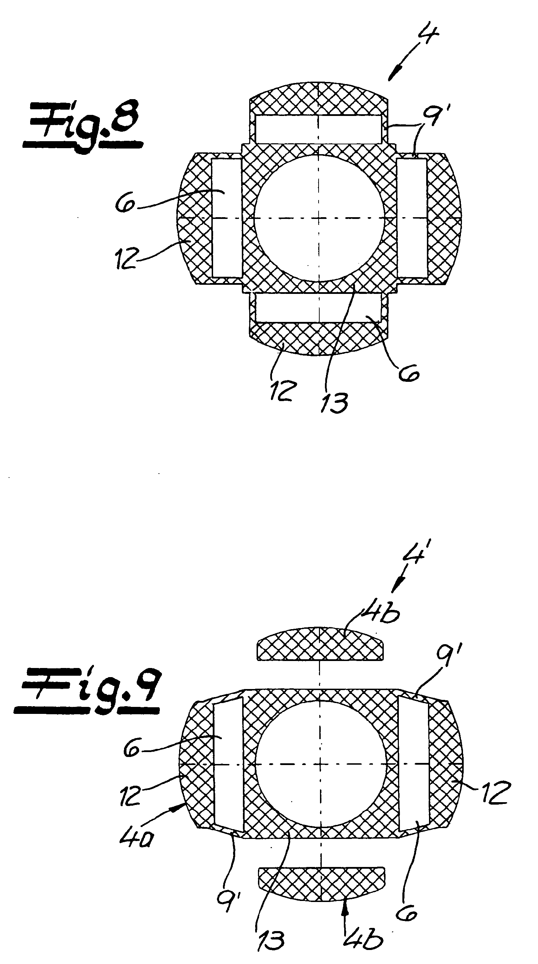

Während die Figuren 1 bis 6 Ausführungsformen zeigen, bei denen T-förmige oder L-förmige Verbindungsstege 9, 10 vorgesehen sind, zeigen die Figuren 8 und 9 beispielhaft abgewandelte Ausführungsformen mit einfachen und folglich geraden oder im Wesentlichen geraden Stegen 9', welche einen Jochblechabschnitt 13 direkt und unmittelbar mit einem Polschuhabschnitt 12 verbinden. Fig. 8 zeigt dabei ein Rotorblech 4 des ersten Blechtyps und folglich ein Halteblech 4, welches in seinem grundsätzlichen Aufbau dem Blech gemäß Fig. 2 entspricht. Bei dieser Ausführungsform wird jedoch auf tangential ausgerichtete Kurzschlussstege, welche zwei benachbarte Polschuhblechabschnitte 12 miteinander verbinden, verzichtet. Stattdessen werden einfache Verbindungsstege 9' vorgesehen, wobei ein Polschuhblechabschnitt 12 jeweils mit zwei Verbindungsstegen 9' unmittelbar mit dem Jochblechabschnitt 13 verbunden ist. Dabei macht Fig. 8 deutlich, dass zwei benachbarte Verbindungsstege 9', welche zwei benachbarten Polschuhabschnitten 12 zugeordnet sind, V-förmig unter einem vorgegebenen Winkel zueinander angeordnet sind. Dieser Winkel hängt von der konkreten Konstruktion und insbesondere auch von der Polzahl des Rotors ab. Grundsätzlich besteht auch bei dieser Ausführungsform die Möglichkeit, zusätzlich einen tangentialen Steg vorzusehen, welcher zwei benachbarte Polschuhblechabschnitte 12 unmittelbar miteinander verbindet, so dass hier insgesamt eine dreieckige Verbindungssteg-Konstruktion vorgesehen wäre. Eine solche Ausgestaltung ist in den Figuren nicht dargestellt.

Fig. 9 zeigt im Übrigen, dass auch bei einem Halteblechteil 4', welches lediglich einen Teil der Magnete aufnimmt, mit einfachen bzw. geraden Verbindungsstegen 9' gearbeitet werden kann. Bei dieser Ausführungsform ist ein Polschuhabschnitt 12 mit jeweils zwei Verbindungsstegen 9' mit dem Jochblechabschnitt 13 verbunden. Fig. 8 und 9 machen deutlich, dass bei diesen Ausführungsformen die Verbindungsstege zum Beispiel die Eckbereiche eines Jochblechabschnittes 13 mit den Eckbereichen oder Randbereichen eines Polschuhblechabschnittes 12 verbinden. Die Verbindungsstege können dabei (exakt) in den Ecken der Jochblechabschnitte 13 angeordnet sein (vgl. Fig. 9) oder auch etwas versetzt bzw. beabstandet zu den Ecken (vgl. Fig. 8). Die exakte Konstruktion gemäß Fig. 9 kann dabei auf die Ausführungsform gemäß Fig. 8 übertragen werden und umgekehrt. Der exakte Verlauf der Verbindungsstege 9' hängt im Übrigen insbesondere von der Polzahl des Rotors ab, da diese auch die geometrische Form des Jochblechabschnittes 13 beeinflusst bzw. bestimmt. Außerdem hängt die Anordnung der Verbindungsstege 9' von der Breite der Polschuhabschnitte 12 bezogen auf die Breite des Jochblechabschnittes 13 bzw. die Breite der Magnete ab. So ist in den Fig. 8 und 9 angedeutet, dass bei diesen Ausführungsformen die Polschuhabschnitte 12 in ihrer Breite in etwa der Breite der Magneten entsprechen.

Fig. 7 illustriert den Aufbau eines Elektromotors bestehend aus einem Stator 1 und einem darin rotierend eingesetzten Rotor 2 der beschriebenen Art. Fig. 7 zeigt dabei den Rotor gemäß Ausführungsform nach Fig. 4 bis 6. Es ist erkennbar, dass die Ausnehmungen 6 einen größeren Querschnitt bzw. eine größere Querschnittsfläche als die eingesetzten Magnete 8 aufweisen, so dass beidseitig der Ausnehmungen Hohlräume 11 gebildet werden.

Im Übrigen ist erkennbar, dass die Polschuhabschnitte 12 und/oder die Polschuhbleche bzw. Polschuhblechteile 5b bzw. 4b in montierten Zustand des Blechpakets außenumfangsseitig angeordnet sind. Sie sind folglich jeweils auf einer Außenseite eines in tangentialer Richtung orientierten Magneten 8 angeordnet, wobei Außenseite hier die der Welle abgewandte und folglich dem Stator zugewandte Seite des Magneten 8 meint. Jedem Magnet ist folglich in der Regel ein Polschuhblech bzw. Polschuhblechteil oder Polschuhabschnitt unmittelbar zugeordnet.

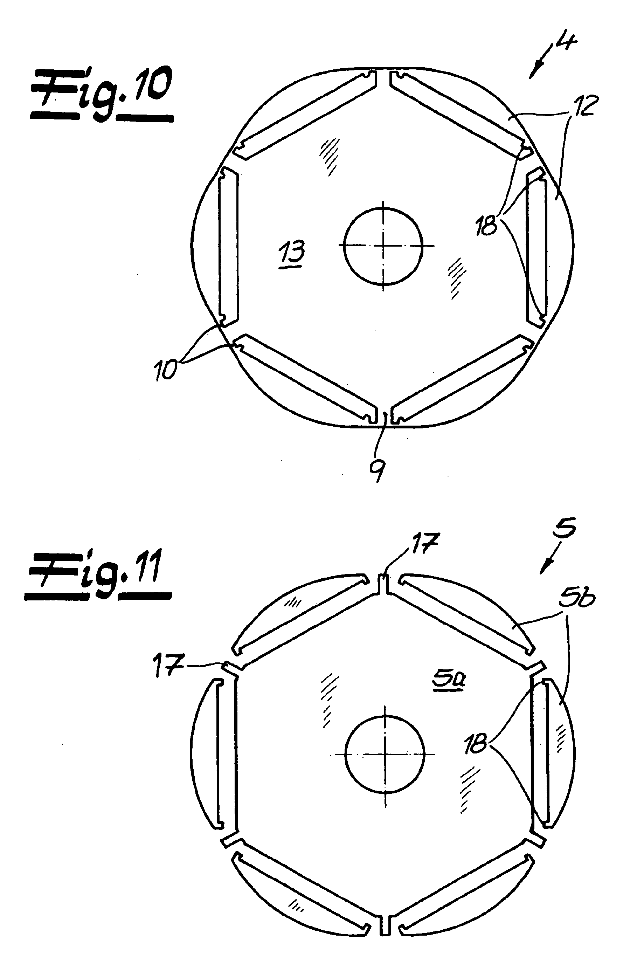

Die Fig. 10 und 11 zeigen eine abgewandelte Ausführungsform der Erfindung, welche in ihrem grundsätzlichen Aufbau mit den beschriebenen Ausführungsformen und insbesondere der Ausführungsform nach Fig. 1 bis 3 vergleichbar ist. Während die Ausführungsform nach Fig. 1 bis 3 vierpolig ausgestaltet ist, zeigen die Fig. 10 und 11 eine sechspolige Variante. Das Rotorblechpaket wird aus einerseits den Halteblechen 4 gemäß Fig. 10 und andererseits den Zwischenblechen 5 gemäß Fig. 11 zusammengesetzt. In Fig. 10 sind wiederum der zentrale Jochblechabschnitt 13 und die Polschuhabschnitte 12 erkennbar, welche über die Verbindungsstege 9, 10 miteinander verbunden sind. In Fig. 11 sind wiederum die separaten Blechteile 5a, 5b erkennbar, nämlich einerseits das zentrale Jochblechteil 5a sowie andererseits die Polschuhblechteile 5b. Bei dieser abgewandelten Ausführungsform sind nun mehrere Montagenasen 17 vorgesehen, welche außenumfangsseitig an die Jochblechteile 5a angeformt sind und - wie in Fig. 11 erkennbar - radial nach außen orientiert sind. Dabei ist in jeder Ecke des sechseckigen Jochblechteils 5a jeweils eine Montagenase vorgesehen. Diese Montagenasen haben keine magnetische Relevanz bzw. Funktion, sie sollen die Handhabung der Zwischenbleche im Zuge der Herstellung und insbesondere im Zuge des Paketierens vereinfachen, um insbesondere zu verhindern, dass die Jochblechteile 5a relativ zu den Polschuhblechteilen 5b verdreht werden. Auch wenn diese Montagenasen 17 in den Figuren lediglich für das sechspolige Ausführungsbeispiel dargestellt sind, so versteht es sich, dass derartige Montagenasen auch bei den anderen Ausführungsformen vorgesehen sein können. Die Montagenasen 17 sind dabei derart an die Jochblechteile 5a angeformt, dass sie zwischen zwei benachbarten Polschuhblechteilen 5b angeordnete sind und im montierten Zustand im Wesentlichen mit einem Verbindungssteg 9 bzw. einem Abschnitt 9 eines Verbindungssteges fluchten. Ferner ist in den Fig. 10 und 11 erkennbar, dass die Polschuhabschnitte 12 und die Pohlschuhblechteile 5b eine Breite aufweisen, die in etwa der Breite der Magnete entspricht oder ggf. etwas größer als die Breite der Magnete ist, wobei an die Polschuhabschnitte 12 und an die Polschuhblechteile 5b jeweils zwei Haltestege 18 angeformt sind, welche die Magnete umgreifen. Obwohl auch bei dieser Ausführungsform folglich beidseitig der Ausnehmungen Hohlräume gebildet werden, wird durch die zusätzlichen Haltestege 18 ein besonders sicherer Halt der Magnete gewährleistet. Derartige Haltestege können auch bei den anderen Ausführungsformen vorgesehen sein.

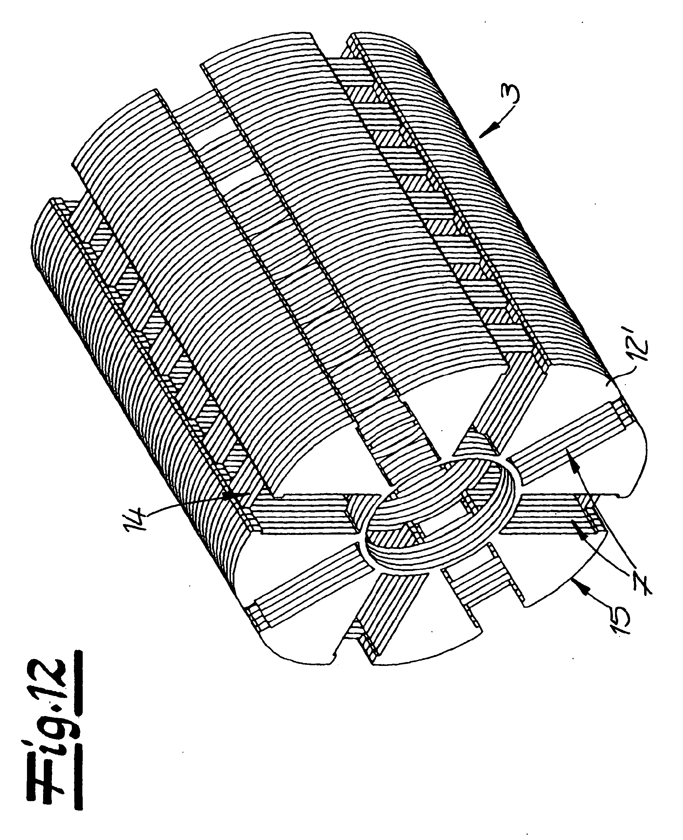

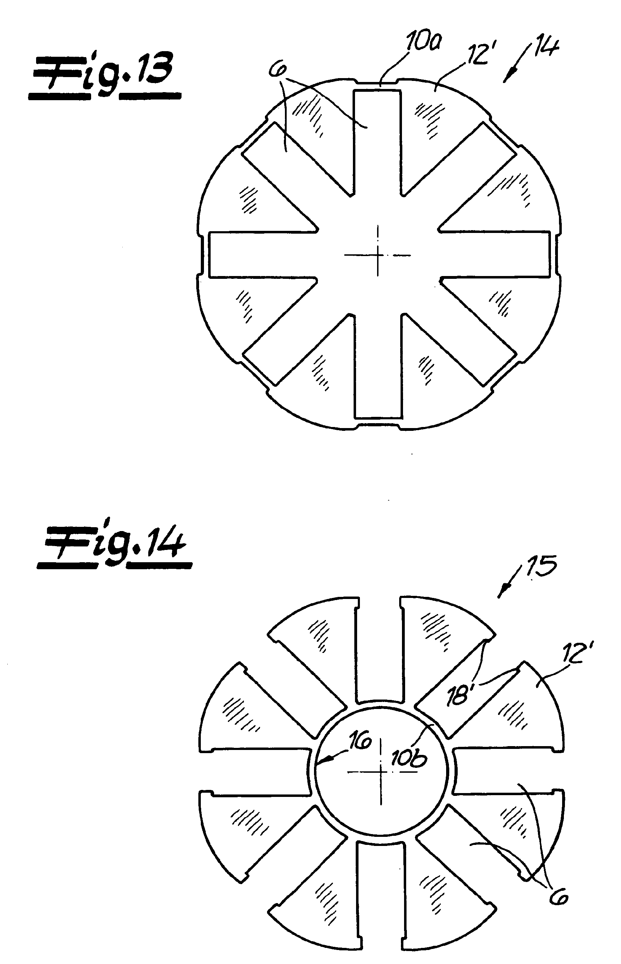

Während die Fig. 1 bis 11 Ausführungsformen mit im Wesentlichen tangential ausgerichteten Magneten zeigen, ist in den Fig. 12 bis 14 eine abgewandelte Ausführungsform mit im Wesentlichen radial orientierten Magneten dargestellt. Es handelt sich im Ausführungsbeispiel um eine achtpolige Variante, die jedoch in entsprechender Weise auch mit anderer Polzahl realisierbar ist. Bei dieser Ausführungsform weisen die Rotorbleche 14, 15 mehrere zwischen den Magneten angeordnete Polschuhabschnitte 12' auf, wobei jeweils zwei benachbarte Polschuhabschnitte 12' über zumindest einen Verbindungssteg 10a, 10b miteinander verbunden sind. Eine vergleichende Betrachtung der Fig. 12 bis 14 macht deutlich, dass auch hier das Blechpaket aus zwei verschieden geformten Rotorblechtypen 14 bzw. 15 zusammengesetzt ist. Einerseits weist der Rotor mehrere Rotorbleche 14 eines ersten Blechtyps auf, bei welchen zwei benachbarte Polschuhabschnitte 12' über außenumfangsseitige Verbindungsstege 10a verbunden sind, welche die Ausnehmung 7 für die Permanentmagnete 8 außenseitig begrenzen. Andererseits weist der Rotor mehrere Rotorbleche 15 eines zweiten Blechtyps auf, bei welchem zwei benachbarte Polschuhabschnitte 12' über innenumfangsseitige Verbindungsstege 10b verbunden sind, die die Ausnehmung 7 für die Permanentmagnete 8 innenseitig begrenzen. Die Verbindungsstege 10a und 10b verlaufen dabei in im Wesentlichen tangentialer Richtung. Das Blechpaket gemäß Fig. 12 wird folglich aus einer Vielzahl von Blechen 14 des ersten Blechtyps gemäß Fig. 13 und Blech 15 des zweiten Blechtyps gemäß Fig. 14 zusammengesetzt. Dabei besteht die Möglichkeit, jeweils abwechselnd ein Blech eines ersten Blechtyps und ein Blech eines zweiten Blechtyps zusammenzusetzen. Im Ausführungsbeispiel sind jeweils vier Bleche eines Blechtyps zusammengefasst und an diese vier Bleche eines Blechtyps schließen sich dann wiederum vier Bleche des anderen Blechtyps an. Obwohl die Ausnehmungen 6 als offene Ausnehmungen, d. h. jeweils einseitig offen ausgebildet sind und lediglich an einer Seite durch einen Verbindungssteg begrenzt sind, entsteht im Zuge des Paketierens eine stabile Aufnahmetasche 7 für die Permanentmagnete 8. Gleichzeitig wird die Zahl der Kurzschlussstege bzw. Sättigungsstege reduziert. Die Anordnung zeichnet sich durch eine besonders hohe Stabilität aus. Die innenseitigen Verbindungsstege 10b eines Rotorblechs bilden dabei einen die Rotorwelle umgebenden Ring 16.

Im Übrigen ist in den Figuren 12 bis 14 erkennbar, dass auch bei dieser Ausführungsform mit radial orientierten Magneten Haltestege 18' vorgesehen sein können, welche die Magnete im montierten Zustand umgreifen. Dabei ist erkennbar, dass derartige Haltestege 18' außenumfangsseitig an die Polschuhblechabschnitte 12' der Rotorbleche mit innenseitigen Verbindungsstegen 10b angeformt sind.

Es versteht sich, dass die einzelnen Bleche bei sämtlichen beschriebenen Ausführungsformen in stabiler Weise zu dem jeweils dargestellten Blechpaket zusammengefasst werden. Dieses kann im Wege des Stanzpaketierens, zum Beispiel durch Stanznoppen und/oder durch Kleben erfolgen. Ergänzend ist es häufig zweckmäßig, das Blechpaket mit einem geeigneten Kunststoff, zum Beispiel Kunstharz, zu umspritzen. Einzelheiten sind in den Figuren nicht dargestellt.

## Patentansprüche

1. Permanentmagnetischer Rotor (2) für einen Elektromotor, vorzugsweise für einen Innenläufermotor,
welcher ein Blechpaket (3) aus mehreren in axialer Richtung gestapelten Rotorblechen (4, 4', 5) aufweist,
wobei in von Ausnehmungen (6) der Rotorbleche gebildeten Aufnahmetaschen (7) Permanentmagnete (8) angeordnet sind, **dadurch gekennzeichnet, dass**
die Magnete (8) im Wesentlichen tangential orientiert sind,
das Blechpaket (3) aus zumindest zwei verschieden geformten Rotorblechtypen (4, 4', 5) zusammengesetzt ist,
wobei einerseits mehrere Rotorbleche (4, 4') eines ersten Rotorblechtyps als Haltebleche (4, 4') vorgesehen sind, welche jeweils einen zentralen Jochblechabschnitt (13) aufweisen, der mit der Rotorwelle verbunden oder verbindbar ist und jeweils einen oder mehrere äußere Polschuhabschnitte (12) aufweisen, die über einen oder mehrere Verbindungsstege (9, 9', 10) oder Stegabschnitte (9, 10) mit dem Jochblechabschnitt (13) verbunden sind,
wobei andererseits mehrere Rotorbleche (5) eines zweiten Rotorblechtyps als Zwischenbleche (5) ohne Verbindungsstege vorgesehen sind,
wobei die Zwischenbleche (5) mehrteilig ausgebildet sind und aus mehreren separaten Blechteilen (5a, 5b) bestehen,
wobei die mehrteiligen Zwischenbleche (5) zumindest ein zentrales Jochblechteil (5a) aufweisen, welches mit einer Rotorwelle verbunden ist oder verbindbar ist und ein oder mehrere außenumfangseitige separate Polschuhblechteile (5b) aufweist,
wobei die Jochblechteile (5a) der Zwischenbleche (5) eine oder mehrere Montagenasen (17) aufweisen, welche außenumfangsseitig an die Jochblechteile (5a) angeformt sind und radial nach außen orientiert sind.

2. Permanentmagnetischer Rotor (2) für einen Elektromotor, vorzugsweise für einen Innenläufermotor,
welcher ein Blechpaket (3) aus mehreren in axialer Richtung gestapelten Rotorblechen (4, 4', 5) aufweist,
wobei in von Ausnehmungen (6) der Rotorbleche gebildeten Aufnahmetaschen (7) Permanentmagnete (8) angeordnet sind, **dadurch gekennzeichnet, dass**
die Magnete (8) im Wesentlichen tangential orientiert sind,
das Blechpaket (3) aus zumindest zwei verschieden geformten Rotorblechtypen (4', 5) zusammengesetzt ist,
wobei einerseits mehrere Rotorbleche (4') eines ersten Rotorblechtyps als Haltebleche (4') vorgesehen sind, welche jeweils einen zentralen Jochblechabschnitt (13) aufweisen, der mit der Rotorwelle verbunden oder verbindbar ist und jeweils einen oder mehrere äußere Polschuhabschnitte (12) aufweisen, die über einen oder mehrere Verbindungsstege (9, 10) oder Stegabschnitte (9, 10) mit dem Jochblechabschnitt (13) verbunden sind,
wobei andererseits mehrere Rotorbleche (5) eines zweiten Rotorblechtyps als Zwischenbleche (5) ohne Verbindungsstege vorgesehen sind, wobei die Zwischenbleche (5) mehrteilig ausgebildet sind und aus mehreren separaten Blechteilen (5a, 5b) bestehen,
wobei die mehrteiligen Zwischenbleche (5) zumindest ein zentrales Jochblechteil (5a) aufweisen, welches mit einer Rotorwelle verbunden ist oder verbindbar ist und ein oder mehrere außenumfangseitige separate Polschuhblechteile (5b) aufweist,
die Rotorbleche (4') des ersten Rotorblechtyps einerseits zumindest ein erstes Blechteil (4a) als Haltblechteil aufweisen, welches einen zentralen Jochblechabschnitt (13) aufweist, der mit einer Rotorwelle verbunden oder verbindbar ist und ein oder mehrere äußere Polschuhabschnitte (12) aufweist, die über ein oder mehrere Verbindungsstege (9, 9', 10) oder Stegabschnitte (9, 9', 10) mit dem Jochblechabschnitt (13) verbunden sind und andererseits zumindest ein zweites Blechteil (4b) ohne Verbindungsstege aufweist,
wobei zwei in axialer Richtung hintereinander und gegebenenfalls axial beabstandete Rotorbleche (4') des ersten Blechtyps um einen vorgegebenen Winkel (α) versetzt zueinander angeordnet sind.

3. Rotor nach Anspruch 1 oder 2, **dadurch gekennzeichnet, dass** ein oder mehrere Zwischenbleche (5), vorzugsweise zumindest drei Zwischenbleche (5), zwischen zwei axial beabstandeten Halteblechen (4, 4') angeordnet sind.

4. Permanentmagnetischer Rotor (2) für einen Elektromotor, vorzugsweise für einen Innenläufermotor,
welcher ein Blechpaket (3) aus mehreren in axialer Richtung gestapelten Rotorblechen (4') aufweist,
wobei in von Ausnehmungen (6) der Rotorbleche gebildeten Aufnahmetaschen (7) Permanentmagnete (8) angeordnet sind, **dadurch gekennzeichnet,**
**dass** die Magnete (8) im Wesentlichen tangential orientiert sind,
**dass** das Blechpaket zumindest Rotorbleche (4') eines ersten Rotorblechtyps aufweist, welche jeweils mehrteilig ausgebildet sind
und einerseits zumindest ein erstes Blechteil (4a) als Halteblechteil aufweisen, welches einen (zentralen) Jochblechabschnitt (13) aufweist, der mit einer Rotorwelle verbunden oder verbindbar ist und einen oder mehrere äußere Polschuhabschnitte (12) aufweist, die über ein oder mehrere Verbindungsstege (9, 9', 10) oder Stegabschnitte (9, 9', 10) mit dem Jochblechabschnitt (13) verbunden sind,
und andererseits zumindest ein zweites Blechteil (4b) ohne Verbindungsstege aufweist,
wobei zwei in axialer Richtung hintereinander angeordnete Rotorbleche (4') des ersten Blechtyps um einen vorgegebenen Winkel (α) versetzt zueinander angeordnet sind.

5. Rotor nach einem der Ansprüche 1 bis 4, **dadurch gekennzeichnet, dass** zwei benachbarte Polschuhabschnitte (12) eines Haltebleches (4) über Verbindungsstege oder Stegabschnitte (9, 10) miteinander verbunden sind, welche vorzugsweise außenumfangseitig zum Beispiel in tangentialer Richtung verlaufen.

6. Rotor nach einem der Ansprüche 1 bis 5, **dadurch gekennzeichnet, dass** die Haltebleche (4) oder die Halteblechteile (4a) jeweils eine oder mehrere Ausnehmungen (6) aufweisen, in welche die Magnete (8) eingesetzt sind, wobei die Ausnehmungen bereichsweise oder zumindest bereichsweise von einem oder mehreren Verbindungsstegen oder Stegabschnitten (9, 9', 10) begrenzt sind.

7. Rotor nach einem der Ansprüche 1 bis 6, **dadurch gekennzeichnet, dass** die Jochblechabschnitte (13) der Haltebleche (4, 4a) mit den Jochblechteilen (5a) der Zwischenbleche (5) fluchten und/oder dass die Polschuhabschnitte (12) der Haltebleche (4, 4a) mit den Polschuhblechteilen (5b) der Zwischenbleche (5) fluchten.

8. Rotor nach einem der Ansprüche 1 bis 7, **dadurch gekennzeichnet, dass** die Verbindungsstege (9, 10) im Wesentlichen T-förmig oder L-förmig mit einem radial ausgerichteten ersten Stegabschnitt (9) und einem tangential ausgerichteten zweiten Stegabschnitt (10) ausgebildet sind.

9. Rotor nach einem der Ansprüche 1 bis 8, **dadurch gekennzeichnet, dass** die Verbindungsstege (9') als einfache, gerade oder im Wesentlichen gerade Stege ausgebildet sind, welche einen Jochblechabschnitt (13) der Haltebleche/ Halteblechteile (4, 4a) mit einem Polschuhabschnitt (12) direkt verbinden, wobei zum Beispiel zwei benachbarten Polschuhabschnitten (12) zugeordnete benachbarte Stege (9') V-förmig oder L-förmig unter einem vorgegebenen Winkel zueinander angeordnet sind.

10. Rotor nach nach einem der Ansprüche 1 bis 9, **dadurch gekennzeichnet, dass** die Montagenasen (17) derart an die Jochblechteile (5a) angeformt sind, dass sie zwischen zwei benachbarten Polschuhblechteilen (5b) angeordnet sind und im montierten Zustand vorzugsweise mit einem Verbindungssteg oder einem Abschnitt eines Verbindungssteges fluchten.

11. Rotor nach einem der Ansprüche 1 bis 10, **dadurch gekennzeichnet, dass** die Polschuhabschnitte (12) und/oder Polschuhblechteile (5b) eine Breite aufweisen, die in etwa der Breite der Magnete (8) entspricht oder geringer ist.

12. Rotor nach einem der Ansprüche 1 bis 10, **dadurch gekennzeichnet, dass** die Polschuhabschnitte (12) und/oder Polschuhblechteile (5b) eine Breite aufweisen, die in etwa der Breite der Magnete (8) entspricht oder größer ist, wobei an die Polschuhabschnitte (12) und/oder die Polschuhblechteile (5b) vorzugsweise Haltestege (18) angeformt sind, welche die Magnete umgreifen.

13. Rotor nach einem der Ansprüche 1 bis 12, **dadurch gekennzeichnet, dass** die Ausnehmungen (6) größer als die Querschnittsfläche der Magnete (8) sind, so dass bei in die Ausnehmungen eingesetzten Magneten einseitig oder beidseitig der Magnete (8) Hohlräume (11) gebildet sind.

14. Rotor nach einem der Ansprüche 1 bis 13, **dadurch gekennzeichnet, dass** die Magnetisierungsrichtung der Magnete (8) im Wesentlichen in radialer oder diametraler Richtung verläuft.

15. Permanentmagnetischer Rotor (2) für einen Elektromotor, vorzugsweise für einen Innenläufermotor,
welcher ein Blechpaket (3) aus mehreren in axialer Richtung gestapelten Rotorblechen (4, 4', 5) aufweist,
wobei in von Ausnehmungen (6) der Rotorbleche gebildeten Aufnahmetaschen (7) Permanentmagnete (8) angeordnet sind, **dadurch gekennzeichnet, dass**
die Magnete (8) im Wesentlichen radial oder schräg bezogen auf den Radius des Rotors (2) orientiert sind,
wobei die Rotorbleche (14, 15) mehrere zwischen den Magneten (8) angeordnete Polschuhabschnitte (12') aufweisen und wobei jeweils zwei benachbarte Polschuhabschnitte (12') über zumindest einen Verbindungssteg (10a, 10b) miteinander verbunden sind,
wobei das Blechpaket (3) aus zumindest zwei verschieden geformten Rotorblechtypen (14, 15) zusammengesetzt ist,
wobei das Blechpaket (3) einerseits ein oder mehrere Rotorbleche (14) eines ersten Blechtyps aufweist, bei welchen zwei benachbarte Polschuhabschnitte (12') über außenumfangsseitige Verbindungsstege (10a) verbunden sind, die die Ausnehmung (7) für die Permanentmagnete (8) außenseitig begrenzen und in im Wesentlichen tangentialer Richtung orientiert sind und
wobei das Blechpaket (3) andererseits ein oder mehrere Rotorbleche (15) eines zweiten Blechtyps aufweist, bei welchen zwei benachbarte Polschuhabschnitte (12') über innenumfangsseitige Verbindungsstege (10b) verbunden sind, die die Ausnehmung (7) für die Permanentmagnete (8) innenseitig begrenzen und einem die Rotorwelle umgebenden Ring (16) bilden.

16. Rotor nach einem der Ansprüche 1 bis 15, **dadurch gekennzeichnet, dass** die Rotorbleche (4, 4', 5, 14, 15) adhäsiv, stoffschlüssig, formschlüssig und/oder kraftschlüssig zu einem Blechpaket (3) zusammengefasst sind,
und/oder dass das Blechpaket (3) umspritzt ist, zum Beispiel mit Kunstharz oder Kunststoff.

## Claims

1. A permanent magnetic rotor (2) for an electric motor, preferably for an internal rotor motor,
which has a plate stack (3) made up of a plurality of rotor plates (4, 4', 5) stacked in the axial direction,
wherein permanent magnets (8) are arranged in retaining pockets (7) formed by recesses (6) of the rotor plates, **characterised in that**
the magnets (8) are essentially orientated tangentially,
the plate stack (3) is composed of at least two differently shaped rotor plate types (4, 4', 5),
wherein on the one hand a plurality of rotor plates (4, 4') of a first rotor plate type are provided as retaining plates (4, 4') which have one central yoke plate section (13) in each case, which is or can be connected to the rotor shaft and in each case have one or a plurality of outer pole shoe sections (12) which are connected via one or a plurality of connecting webs (9, 9', 10) or web sections (9, 10) to the yoke plate section (13),
wherein on the other hand, a plurality of rotor plates (5) of a second rotor plate type are provided as intermediate plates (5) without connecting webs,
wherein the intermediate plates (5) are constructed in multiple parts and consist of a plurality of separate plate parts (5a, 5b),
wherein the intermediate plates (5) in multiple parts have at least one central yoke plate part (5a) which is or can be connected to a rotor shaft and has one or a plurality of separate pole shoe plate parts (5b) on the outer circumference side,
wherein the yoke plate parts (5a) of the intermediate plates (5) have one or a plurality of mounting lugs (17) which are formed onto the yoke plate parts (5a) on the outer circumference side and are orientated radially outwards.

2. A permanent magnetic rotor (2) for an electric motor, preferably for an internal rotor motor,
which has a plate stack (3) made up of a plurality of rotor plates (4, 4', 5) stacked in the axial direction,
wherein permanent magnets (8) are arranged in retaining pockets (7) formed by recesses (6) of the rotor plates, **characterised in that**
the magnets (8) are essentially orientated tangentially,
the plate stack (3) is composed of at least two differently shaped rotor plate types (4', 5),
wherein on the one hand a plurality of rotor plates (4') of a first rotor plate type are provided as retaining plates (4') which have one central yoke plate section (13) in each case, which is or can be connected to the rotor shaft and in each case have one or a plurality of outer pole shoe sections (12) which are connected via one or a plurality of connecting webs (9, 10) or web sections (9, 10) to the yoke plate section (13),
wherein on the other hand, a plurality of rotor plates (5) of a second rotor plate type are provided as intermediate plates (5) without connecting webs, wherein the intermediate plates (5) are constructed in multiple parts and consist of a plurality of separate plate parts (5a, 5b),
wherein the intermediate plates (5) in multiple parts have at least one central yoke plate part (5a) which is or can be connected to a rotor shaft and has one or a plurality of separate pole shoe plate parts (5b) on the outer circumference side,
the rotor plates (4') of the first rotor plate type on the one hand have at least one first plate part (4a) as retaining plate part which has one central yoke plate section (13), which is or can be connected to a rotor shaft and has one or a plurality of outer pole shoe sections (12) which are connected via one or a plurality of connecting webs (9, 9', 10) or web sections (9, 9', 10) to the yoke plate section (13) and on the other hand has at least one second plate part (4b) without connecting webs,
wherein two rotor plates (4') of the first plate type, which are spaced apart in the axial direction one behind the other and if appropriate axially, are arranged in an offset manner with respect to one another by a predetermined angle (α).

3. The rotor according to Claim 1 or 2, **characterised in that** one or a plurality of intermediate plates (5), preferably at least three intermediate plates (5), are arranged between two axially spaced retaining plates (4, 4').

4. A permanent magnetic rotor (2) for an electric motor, preferably for an internal rotor motor,
which has a plate stack (3) made up of a plurality of rotor plates (4') stacked in the axial direction,
wherein permanent magnets (8) are arranged in retaining pockets (7) formed by recesses (6) of the rotor plates, **characterised**
**in that** the magnets (8) are essentially orientated tangentially,
**in that** the plate stack at least has rotor plates (4') of a first rotor plate type, which are constructed in multiple parts in each case
and on the one hand have at least one first plate part (4a) as retaining plate part which has one (central) yoke plate section (13), which is or can be connected to a rotor shaft and has one or a plurality of outer pole shoe sections (12) which are connected via one or a plurality of connecting webs (9, 9', 10) or web sections (9, 9', 10) to the yoke plate section (13),
and on the other hand has at least one second plate part (4b) without connecting webs,
wherein two rotor plates (4') of the first plate type, which are arranged in the axial direction one behind the other, are arranged in an offset manner with respect to one another by a predetermined angle (α).

5. The rotor according to one of Claims 1 to 4, **characterised in that** two adjacent pole shoe sections (12) of a retaining plate (4) are connected to one another via connecting webs or web sections (9, 10) which preferably run on the outer circumference side for example in the tangential direction.

6. The rotor according to one of Claims 1 to 5, **characterised in that** the retaining plates (4) or the retaining plate parts (4a) in each case have one or a plurality of recesses (6), into which the magnets (8) are inserted, wherein the recesses are delimited in certain areas or at least in certain areas by one or a plurality of connecting webs or web sections (9, 9', 10).

7. The rotor according to one of Claims 1 to 6, **characterised in that** the yoke plate sections (13) of the retaining plates (4, 4a) are flush with the yoke plate parts (5a) of the intermediate plates (5) and/or **in that** the pole shoe sections (12) of the retaining plates (4, 4a) are flush with the pole shoe plate parts (5b) of the intermediate plates (5).

8. The rotor according to one of Claims 1 to 7, **characterised in that** the connecting webs (9, 10) are constructed in an essentially T-shaped or L-shaped manner with a radially orientated first web section (9) and a tangentially orientated second web section (10).

9. The rotor according to one of Claims 1 to 8, **characterised in that** the connecting webs (9') are constructed as simple straight or essentially straight webs which directly connect a yoke plate section (13) of the retaining plates/retaining plate parts (4, 4a) with a pole shoe section (12), wherein for example two adjacent webs (9') assigned to two adjacent pole shoe sections (12) are arranged in a V-shaped or L-shaped manner at a predetermined angle with respect to one another.

10. The rotor according to one of Claims 1 to 9, **characterised in that** the mounting lugs (17) are shaped onto the yoke plate parts (5a) in such a manner that they are arranged between two adjacent pole shoe plate parts (5b) and in the mounted state are preferably flush with a connecting web or a section of a connecting web.

11. The rotor according to one of Claims 1 to 10, **characterised in that** the pole shoe sections (12) and/or pole shoe plate parts (5b) have a width, which approximately corresponds to or is lower than the width of the magnets (8).

12. The rotor according to one of Claims 1 to 10, **characterised in that** the pole shoe sections (12) and/or pole shoe plate parts (5b) have a width, which approximately corresponds to or is larger than the width of the magnets (8), wherein retaining webs (18) are preferably formed onto the pole shoe sections (12) and/or the pole shoe plate parts (5b).

13. The rotor according to one of Claims 1 to 12, **characterised in that** the recesses (6) are larger than the cross-sectional area of the magnets (8), so that cavities (11) are formed on one side or on both sides of the magnets (8) with the magnets inserted into the recesses.

14. The rotor according to one of Claims 1 to 13, **characterised in that** the magnetisation direction of the magnets (8) runs essentially in the radial or diametrical direction.

15. A permanent magnetic rotor (2) for an electric motor, preferably for an internal rotor motor,
which has a plate stack (3) made up of a plurality of rotor plates (4, 4', 5) stacked in the axial direction,
wherein permanent magnets (8) are arranged in retaining pockets (7) formed by recesses (6) of the rotor plates, **characterised in that**
the magnets (8) are orientated essentially radially or obliquely with respect to the radius of the rotor (2),
wherein the rotor plates (14, 15) have a plurality of pole shoe sections (12') arranged between the magnets (8) and wherein in each case two adjacent pole shoe sections (12') are connected to one another via at least one connecting web (10a, 10b),
wherein the plate stack (3) is composed of at least two differently shaped rotor plate types (14, 15),
wherein the plate stack (3) on the one hand has one or a plurality of rotor plates (14) of a first plate type, in the case of which two adjacent pole shoe sections (12') are connected via connecting webs (10a) on the outer circumference side, which delimit the recess (7) for the permanent magnets (8) externally and are orientated in the essentially tangential direction and
wherein the plate stack (3) on the other hand has one or a plurality of rotor plates (15) of a second plate type, in the case of which two adjacent pole shoe sections (12') are connected via connecting webs (10a) on the inner circumference side, which delimit the recess (7) for the permanent magnets (8) internally and form a ring (16) surrounding the rotor shaft.

16. The rotor according to one of Claims 1 to 15, **characterised in that** the rotor plates (4, 4', 5, 14, 15) are combined in an adhesive, materially bonded, positively fitting and/or non-positively fitting manner to form a plate stack (3) and/or **in that** the plate stack (3) is overmoulded, for example with synthetic resin or plastic.

## Revendications

1. Rotor magnétique permanent (2) pour moteur électrique, de préférence pour un moteur à induit intérieur, qui présente un empilage de tôles (3) constitué de plusieurs tôles de rotor (4,4',5) empilées dans la direction axiale, dans lequel des aimants permanents (8) sont disposés dans des poches de réceptacle formées par des évidements (6) des tôles de rotor, **caractérisé en ce que** les aimants (8) sont orientés essentiellement tangentiellement, l'empilage de tôles (3) est composé d'au moins deux types de tôles de rotor (4,4',5) de formes différentes, dans lequel d'une part plusieurs tôles de rotor (4,4') d'un premier type de tôle de rotor sont prévues en tant que tôles de retenue (4,4'), lesquelles présentent respectivement une portion de tôle de culasse centrale (13), qui est reliée ou peut être reliée à l'arbre de rotor et présentent respectivement une ou plusieurs portions de masse polaire extérieure (12), qui sont reliées par l'intermédiaire d'un ou plusieurs gradins de liaison (9,9',10) ou une ou plusieurs portions de gradin (9,10) à la portion de tôle de culasse (13), dans lequel d'quatre part plusieurs tôles de rotor (5) d'un deuxième type de tôle de rotor sont prévues en tant que tôles intermédiaires (5) sans gradins de liaison, dans lequel les tôles intermédiaires (5) sont conçues en plusieurs parties et sont constituées de plusieurs parties de tôle séparées (5a,5b), dans lequel les tôles intermédiaires en plusieurs parties (5) présentent au moins une partie de tôle de culasse centrale (5a), qui est reliée ou peut être reliée à l'arbre de rotor et présente une ou plusieurs parties de masse polaire (5b) séparées du côté de la circonférence extérieure, dans lequel les parties de tôle de culasse (5a) des tôles intermédiaires (5) présentent un ou plusieurs nez de montage (17), lesquels sont façonnés sur les parties de tôle de culasse du côté de la circonférence extérieure et sont orientés radialement vers l'extérieur.

2. Rotor magnétique permanent (2) pour moteur électrique, de préférence pour un moteur à induit intérieur, qui présente un empilage de tôles (3) constitué de plusieurs tôles de rotor (4,4',5) empilées dans la direction axiale, dans lequel des aimants permanents (8) sont disposés dans des poches de réceptacle formées dans des évidements (6) des tôles de rotor, **caractérisé en ce que** les aimants (8) sont orientés essentiellement tangentiellement, l'empilage de tôles (3) est composé d'au moins deux types de tôles de rotor (4',5) de formes différentes, dans lequel d'une part plusieurs tôles de rotor (4') d'un premier type de tôle de rotor sont prévues en tant que tôles de retenue (4'), lesquelles présentent respectivement une portion de tôle de culasse centrale (13), qui est reliée ou peut être reliée à l'arbre de rotor et présentent respectivement une ou plusieurs portions de masse polaire extérieure (12), qui sont reliées par l'intermédiaire d'un ou plusieurs gradins de liaison (9,10) ou une ou plusieurs portions de gradin (9,10) à la portion de tôle de culasse (13), dans lequel d'autre part plusieurs tôles de rotor (5) d'un deuxième type de tôle de rotor sont prévues en tant que tôles intermédiaires (5) sans gradins de liaison, dans lequel les tôles intermédiaires (5) sont conçues en plusieurs parties et sont constituées de plusieurs parties de tôle séparées (5a,5b), dans lequel les tôles intermédiaires en plusieurs parties (5) présentent au moins une partie de tôle de culasse centrale (5a), qui est reliée ou peut être reliée à un arbre de rotor et présente une ou plusieurs parties de masse polaire séparée (5b) du côté de la circonférence extérieure, les tôles de rotor (4') du premier type de tôle de rotor présentent d'une part au moins une première partie de tôle (4a) en tant que partie de tôle de retenue, qui présente une portion de tôle de culasse centrale (13), qui est reliée ou peut être reliée à un arbre de rotor et présente une ou plusieurs portions de masse polaire extérieure (12), qui sont reliées à la portion de tôle de culasse (13) par l'intermédiaire d'un ou plusieurs gradins de liaison (9;9',10) ou une ou plusieurs portions de gradin (9,9',10) et présente d'autre part au moins une deuxième partie de tôle (4b) sans gradins de liaison, dans lequel deux tôles de rotor (4') disposées l'une derrière l'autre dans la direction axiale et le cas échéant espacées axialement du premier type de tôle sont disposées en décalage d'un angle prescrit (α) l'une par rapport à l'autre.

3. Rotor selon les revendications 1 ou 2, **caractérisé en ce que** une ou plusieurs tôles intermédiaires (5), de préférence au moins trois tôles intermédiaires (5), sont disposées entre deux tôles de retenue (4,4') espacées axialement.

4. Rotor magnétique permanent (2) pour moteur électrique, de préférence pour un moteur à induit intérieur, qui présente un empilage de tôles (3) constitué de plusieurs tôles de rotor (4') empilées dans la direction axiale, dans lequel des aimants permanents (8) sont disposés dans des poches de réceptacle formées dans des évidements (6) des tôles de rotor, **caractérisé en ce que** les aimants (8) sont orientés essentiellement tangentiellement, l'empilage de tôle présente au moins des tôles de rotor (4') d'un premier type de tôle de rotor, qui sont respectivement conçues en plusieurs parties et présentent d'une part au moins une première partie de tôle (4a) en tant que partie de tôle de retenue, qui présente une portion de tôle de culasse (13) (centrale), qui est reliée ou peut être reliée à un arbre de rotor et présente une ou plusieurs portions de masse polaire extérieure, qui sont reliées par l'intermédiaire d'un ou plusieurs gradins de liaison (9,9',10) ou une ou plusieurs portions de gradin (9,9',10) à la portion de tôle de culasse (13), et d'autre part présente au moins une deuxième partie de tôle (4b) sans gradins de liaison, dans lequel deux tôles de rotor (4') disposées l'une derrière l'autre dans la direction axiale du premier type de tôle sont disposées en décalage l'une par rapport à l'autre d'un angle prescrit (α).

5. Rotor selon une des revendications 1 à 4, **caractérisé en ce que** deux portions de masse polaire (12) voisines d'une tôle de retenue (4) sont reliées l'une à l'autre par l'intermédiaire de gradins de liaison ou portions de gradin (9,10), qui s'étendent de préférence par exemple dans la direction tangentielle du côté de la circonférence extérieure.

6. Rotor selon une des revendications 1 à 5, **caractérisé en ce que** les tôles de retenue (4) ou les parties de tôle de retenue (4a) présentent respectivement un ou plusieurs évidements (6), dans lesquels les aimants (8) sont insérés, dans lequel les évidements sont délimités sur des portions ou au moins sur des portions par un ou plusieurs gradins de liaison ou une ou plusieurs portions de gradin (9 ;9',10).

7. Rotor selon une des revendications 1 à 6, **caractérisé en ce que** les portions de tôle de culasse (13) des tôles de retenue (4,4a) s'alignent avec les partie de tôle de culasse (5a) des tôles intermédiaires (5) et/ou en ce que les portions de masse polaire (12) des tôles de retenue (4a,4a) s'alignent avec les parties de tôle de masse polaire (5b) des tôles intermédiaires (5).

8. Rotor selon une des revendications 1 à 7, **caractérisé en ce que** les gradins de liaison (9,10) sont conçus essentiellement en forme de T ou en forme de L avec une première portion de gradin (9) orientée radialement et une deuxième portion de gradin (10) orientée tangentiellement.

9. Rotor selon une des revendications 1 à 8, **caractérisé en ce que** les gradins de liaison (9') sont connus comme des gradins simples, droits ou essentiellement droits, qui relient directement une portion de masse polaire (13) des tôles de retenue/parties de tôle de retenue (4,4a) avec une portion de masse polaire (12), dans lequel par exemple deux gradins voisins (9') coordonnés aux portions de masse polaire (12) sont disposés en forme de V ou en forme de L à un angle prescrit l'un par rapport à l'autre.

10. Rotor selon une des revendications 1 à 9, **caractérisé en ce que** les nez de montage (17') sont façonnés sur les parties de tôle de culasse (5a) de telle sorte qu'ils soient disposés entre deux parties de tôles de masse polaire (5b) voisines et s'alignent en l'état monté de préférence avec un gradin de liaison ou une portion d'un gradin de liaison.

11. Rotor selon une des revendications 1 à 10, **caractérisé en ce que** les portions de masse polaire (12) et/ou les parties de masse polaire (5b) présentent une largeur, qui correspond environ à la largeur des aimants (8) ou est inférieure.

12. Rotor selon une des revendications 1 à 10, **caractérisé en ce que** les portions de masse polaire (12) et/ou les parties de tôle de masse polaire (5b) présentent une largeur, qui correspond environ à la largeur des aimants (8) ou est supérieure, dans lequel sur les portions de masse polaire (12) et/ou les parties de tôle de masse polaire (5b) des gradins de retenue sont de préférence façonnés, qui entourent les aimants.

13. Rotor selon une des revendications 1 à 12, **caractérisé en ce que** les évidements (6) sont plus grands que la surface de section transversale des aimants (8), de sorte que sur les aimants insérés dans les évidements des espaces creux (11) soient formés d'un côté ou des deux côtés des aimants (8).

14. Rotor selon une des revendications 1 à 13, **caractérisé en ce que** la direction de magnétisation des aimants (8) s'étend essentiellement dans une direction radiale ou diamétrale.

15. Rotor magnétique permanent (2) pour moteur électrique, de préférence pour un moteur à induit intérieur, qui présente un empilage de tôles (3) constitué de plusieurs tôles de rotor (4,4',5) empilées dans la direction axiale, dans lequel des aimants permanents (8) sont disposés dans des poches de réceptacle formées dans des évidements (6) des tôles de rotor, **caractérisé en ce que** les aimants (8) sont orientés essentiellement radialement ou en biais par rapport au rayon du rotor (2), dans lequel les tôles de rotor (14,15) présentent plusieurs portions de masse polaire (12') disposées entre les aimants (8) et dans lequel respectivement deux portions de masse polaire voisines (12') sont reliées l'une à l'autre par l'intermédiaire d'au moins un gradin de liaison (10a,10b), dans lequel l'empilage de tôles (3) est composé d'au moins deux types de tôles de rotor (14,15) de forme différente, dans lequel l'empilage de tôles (3) présente d'une part une ou plusieurs tôles de rotor (14) d'un premier type de tôle, dans lequel deux portions de masse polaire voisines (12') sont reliées par l'intermédiaire de gradins de liaison (10a) du côté de la circonférence extérieure, qui délimitent du côté extérieur l'évidement (7) destiné aux aimants permanents (8) et sont orientés dans la direction essentiellement tangentielle et dans lequel l'empilage de tôles (3) présente d'autre part une ou plusieurs tôles de rotor (15) d'un deuxième type de tôle, dans lequel deux portions de masse polaire voisines (12') sont reliées par l'intermédiaire de gradins de liaison (10b) du côté de la circonférence intérieure, qui délimitent l'évidement du côté intérieur (7) destiné aux aimants permanents (8) et forment un anneau (16) entourant l'arbre de rotor.

16. Rotor selon une des revendications 1 à 15, **caractérisé en ce que** les tôles de rotor (4,4',5,14,15) sont assemblées par adhésif, par conjonction de matière, par conjonction de forme et/ou par conjonction de force en un empilage de tôles (3), et/ou l'empilage de tôles (3) est surmoulé, par exemple résine synthétique ou en plastique.
